# FASCICULE DE BREVET EUROPEEN

(11) **EP 2 938 045 B1**
(45) Date de publication et mention de la délivrance du brevet: **06.07.2016**
(21) Numéro de dépôt: 14169111.3
(22) Date de dépôt: 20.05.2014
(51) Int. Cl.: H04L 29/08

(54) **Méthode de géolocalisation**
Geolokalisierungssystem
Geopositioning method

(43) Date de publication de la demande: 28.10.2015
(73) Titulaire: Proxistore S.A., 1080 Bruxelles (BE)
(72) Inventeur: van Boucq, Bruno, 1320 Beauvechain (BE)
(74) Mandataire: Gevers Patents

(56) Documents cités:
- US-A1- 2002 087 666
- US-A1- 2007 233 864
- US-A1- 2010 153 540

## Description

### Domaine technique

La présente invention concerne une méthode de géolocalisation. Plus précisément, la présente invention concerne une méthode de géolocalisation pour la diffusion d'annonces publicitaires.

### Etat antérieur de la technique

Des publicités non intrusives, ouvertes par défaut, sont connues pour l'annonce de biens et de services sur internet lorsque l'utilisateur accède à des pages particulières auxquelles sont liées ces publicités. Ceci permet à des annonceurs, qui sponsorisent éventuellement le site internet où apparaît leur publicité, de diffuser une annonce que l'utilisateur d'internet, c'est-à-dire l'internaute, voit apparaître sur son écran.

Cependant, dans la plupart des cas, ces annonces concernent des détaillants nationaux et des fournisseurs de service que l'internaute ne peut localiser précisément qu'après avoir entrepris des étapes additionnelles de recherche. Par exemple, après avoir visionné la publicité (annonce) et si cette dernière a suscité de l'intérêt auprès de l'internaute, ce dernier doit, sur base des informations mentionnées dans l'annonce, consulter une carte (plan) pour localiser l'annonceur ou du moins son point de vente de façon plus précise. Ainsi, fréquemment, l'internaute est amené à recevoir et à visionner des annonces d'annonceurs dont les points de vente peuvent être relativement éloignés de l'endroit où il se trouve au moment où l'annonce s'affiche. Ceci n'est ni intéressant pour l'internaute qui, généralement, ne trouve pas d'intérêt à se rendre dans un point de vente éloigné, ni pour l'annonceur dont l'annonce n'a pas de réel impact sur des internautes situés à une distance trop importante de son point de vente.

C'est pourquoi des méthodes de géolocalisation ont été développées avec pour objectif de localiser l'internaute aussi précisément que possible afin de lui soumettre des annonces les plus pertinentes possible, c'est-à-dire des annonces d'annonceurs dont les points de vente sont proches de sa géolocalisation.

Une telle méthode est par exemple connue du document WO-A-2002/103997 qui décrit différentes façons de géolocaliser un internaute. Elles peuvent être la géolocalisation par l'internaute lui-même s'il accepte de spécifier sa géolocalisation, la géolocalisation à l'aide d'une base de données qui détient des informations sur l'internaute si une telle base de données existe, ou la géolocalisation sur base de l'adresse IP de l'internaute, cette dernière façon de géolocaliser l'internaute étant toujours possible. L'adresse IP de l'internaute, c'est-à-dire l'adresse IP de la connexion de l'appareil qu'il utilise à un réseau informatique, correspond à un numéro d'identification attribué de façon permanente ou provisoire à chaque appareil connecté à un réseau informatique utilisant l'« internet protocol » (protocole de communication conçu pour être utilisé par internet). L'information de géolocalisation et l'adresse IP peuvent être mises en correspondance dans une base de données pour retrouver ultérieurement l'information de géolocalisation à partir de l'adresse IP.

Pour l'annonceur, cette méthode est intéressante puisque son annonce est diffusée auprès d'internautes localisés. Par ailleurs, son annonce étant plus pertinente quant à la géolocalisation de l'internaute qu'une annonce non locale, elle a beaucoup plus de chance de susciter l'intérêt de ce dernier.

Le document US-A-2007/0233864 divulgue un système de localisation qui détermine une aire de service d'une ressource web sur base d'adresses IP d'utilisateurs. Le système de localisation récupère les adresses IP à partir des informations d'accès au web et ensuite détermine les localisation géographiques associées avec les adresses IP.

Malheureusement, une géolocalisation de l'internaute selon son adresse IP est imprécise et ne permet pas de localiser l'internaute à l'endroit exact où il se trouve. En effet, l'adresse IP d'un internaute dépend du fournisseur intemet, lequel ne lie pas toujours forcément cette adresse avec l'endroit précis où se situe la connexion internet.

Dans l'intérêt de l'annonceur mais aussi pour que l'internaute reçoive des annonces correspondant mieux à sa géolocalisation, d'autres méthodes ont été développées. Par exemple, le document WO-A-2013/057269 divulgue une méthode de diffusion d'annonces publicitaires basée sur la géolocalisation par au moins un des moyens suivants : par adresse IP, par le navigateur internet de l'internaute, par un service de géolocalisation de ce navigateur internet, par l'internaute lui-même qui spécifie sa géolocalisation.

Cependant, dans la majorité des cas, l'internaute refuse d'être géolocalisé par son navigateur internet et un service de géolocalisation de ce dernier ou de spécifier sa géolocalisation, et la géolocalisation ne peut se faire que par adresse IP. En pratique, les adresses IP d'internautes se trouvant sur un territoire de parfois plusieurs kilomètres peuvent être géolocalisées de façon groupée au même point de latitude et de longitude, appelé point de géolocalisation d'adresses IP, ce qui ne correspond pas à la géolocalisation réelle des internautes.

Un désavantage important de la géolocalisation d'internautes uniquement par la géolocalisation de leur adresse IP est que des annonces publicitaires à destination du point où les adresses IP des internautes sont géolocalisées sont diffusées à des internautes se trouvant parfois en réalité fort éloignés de ce point. Il arrive aussi que le point de géolocalisation d'un groupe d'adresses IP se trouve en-dehors de la zone où se situent les internautes qui ont ces adresses IP.

Un autre désavantage est que certaines zones paraissent vides de tout internaute et donc les annonces publicitaires à destination de ces zones ne peuvent pas être diffusées, alors que des internautes sont en réalité présents dans ces zones apparaissant comme vides.

Un autre cas de figure particulièrement problématique concerne des internautes dont les adresses IP sont regroupées même si les internautes sont dispersés dans une zone extrêmement grande. Par exemple, en Belgique, beaucoup d'adresses IP sont géolocalisées de façon groupée à proximité de Ninove alors que les internautes qui ont ces adresses IP se trouvent dans tout le pays.

### Divulgation de l'invention

Un objet de la présente invention est de fournir une méthode de géolocalisation permettant d'attribuer une géolocalisation précise à un internaute dont l'adresse IP est connue mais qui n'est pas géolocalisé par d'autres méthodes de géolocalisation que la géolocalisation par son adresse IP.

Un autre objet de la présente invention est de fournir une méthode de géolocalisation permettant d'attribuer une géolocalisation précise et proche de sa géolocalisation réelle à un internaute dont l'adresse IP est connue.

Un objet de la présente invention est la détermination, pour un point où des adresses IP sont géolocalisées, d'un territoire qui lui correspond, territoire qui couvre des internautes dont les adresses IP sont géolocalisées audit point.

Un objet de la présente invention est de fournir une méthode de géolocalisation qui permet à un internaute d'être dirigé vers des campagnes de publicités locales.

Un objet de la présente invention est de permettre à des annonceurs de diffuser des annonces dans des zones géographiques de diffusion prédéfinies.

Pour répondre aux objets de la présente invention, il est prévu, suivant l'invention, une méthode de géolocalisation d'un internaute dont l'adresse IP est connue, ce qui permet de déterminer un point de géolocalisation de son adresse IP, dans laquelle l'internaute se voit attribuer une géolocalisation sur un territoire correspondant au point de géolocalisation de son adresse IP et caractérisée en ce que le territoire correspondant au point de géolocalisation de l'adresse IP dudit internaute est déterminé par un recoupement de données de géolocalisation par adresse IP et de données de géolocalisation par au moins une autre méthode de géolocalisation, lesquelles données concernent une pluralité d'autres internautes géolocalisés par leur adresse IP et géolocalisés par au moins une autre méthode de géolocalisation.

L'avantage d'une telle méthode est que les internautes dont les adresses IP sont géolocalisées au même point sont répartis sur un certain territoire. Par rapport au cas où les internautes géolocalisés uniquement par leur adresse IP paraissent regroupés au point de géolocalisation de leur adresse IP et reçoivent tous la publicité locale correspondant à ce point, une géolocalisation sur un territoire diminue la probabilité qu'une zone paraisse vide d'internautes et qu'aucune publicité locale ne puisse y être diffusée, alors que des internautes pourraient y être présents. Autrement dit, la méthode selon une réalisation de la présente invention minimise la probabilité qu'une zone de diffusion d'annonces publicitaires ne couvre aucun internaute.

Avantageusement, selon l'invention, l'attribution à l'internaute d'une géolocalisation sur le territoire correspondant au point de géolocalisation de son adresse IP se fait de façon à obtenir une distribution substantiellement homogène des géolocalisations des internautes sur les territoires correspondant aux points de géolocalisation de leur adresse IP.

Une répartition substantiellement homogène des internautes permet que les internautes soient bien répartis parmi les zones de diffusion des annonces publicitaires. Cela permet aussi que les annonces publicitaires soient bien réparties parmi les internautes.

Dans une réalisation particulière de la présente invention, l'attribution à l'internaute d'une géolocalisation sur le territoire correspondant au point de géolocalisation de son adresse IP se fait de façon à éviter une densité de géolocalisations d'internautes trop élevée dans les régions où des territoires correspondant à plusieurs points de géolocalisation d'adresses IP se superposent.

Cette réalisation de l'invention résout un problème qui pourrait survenir lorsque des territoires correspondant à plusieurs points de géolocalisation d'adresses IP se superposent. Si l'attribution de la géolocalisation de l'internaute ne prend en compte que le territoire correspondant à son adresse IP et les autres internautes dont l'adresse IP est géolocalisée au même point que lui, autrement dit, si l'attribution ne prend pas en compte les autres territoires, les zones où plusieurs territoires correspondant à plusieurs adresses IP se superposent auront une densité d'internautes supérieure aux zones où un seul territoire existe. Cette réalisation de l'invention attribue des géolocalisations aux internautes de façon à éviter une densité d'internautes trop élevée.

De préférence, dans une réalisation de l'invention, l'attribution à l'internaute d'une géolocalisation sur le territoire correspondant au point de géolocalisation de son adresse IP exclut une partie du territoire. Exclure une partie du territoire permet par exemple de ne pas géolocaliser d'internautes dans des zones de mer, de lac, de forêt où la densité d'internautes est a priori faible. Cela permet aussi d'exclure des zones de pays limitrophes ou de langues pour lesquelles les annonces publicitaires ne seraient pas pertinentes.

Avantageusement, dans une réalisation de l'invention, l'attribution à l'internaute d'une géolocalisation sur le territoire correspondant au point de géolocalisation de son adresse IP prend en compte des données de l'internaute. Ces données peuvent venir du fournisseur d'accès de l'internaute, comme son adresse IP, d'un formulaire que l'internaute a rempli précédemment, d'un cookie ou d'une autre source. Elles peuvent donner des indications sur la géolocalisation probable de l'internaute. Par exemple, un internaute se trouvant proche de la frontière franco-belge mais utilisant un fournisseur d'accès belge est plus probablement en Belgique qu'en France, ou s'il surfe sur un site d'extension .be, il est aussi plus probablement en Belgique qu'en France.

En outre, dans une réalisation particulière de l'invention, l'attribution à l'internaute d'une géolocalisation sur le territoire correspondant au point de géolocalisation de son adresse IP prend en compte la langue dans laquelle l'internaute utilise intemet. Un internaute se trouvant à proximité d'une frontière linguistique se verra préférentiellement attribuer une géolocalisation du côté de la frontière correspondant à la langue dans laquelle il utilise intemet. Cette réalisation de l'invention est particulièrement utile dans les pays comme la Belgique qui a plusieurs régions linguistiques.

Certains intemautes sont géolocalisés à la fois par leur adresse IP et par au moins une autre méthode de géolocalisation. En recoupant les données concernant les points de géolocalisation de leur adresse IP et les données concernant la ou les géolocalisation(s) par la ou les autre(s) méthode(s) de géolocalisation, plus précise(s) que la géolocalisation par adresse IP, il est possible de déterminer des territoires correspondant aux points de géolocalisation d'adresses IP.

Cette méthode est particulièrement avantageuse car elle permet que la géolocalisation attribuée à l'internaute soit proche de sa géolocalisation réelle. Par exemple, un point de géolocalisation d'adresses IP peut être en réalité loin de l'ensemble des internautes dont l'adresse IP se trouve géolocalisée en ce point. Comme la présente méthode détermine le territoire correspondant à un point de géolocalisation d'adresses IP en fonction des internautes géolocalisés aussi par une ou des autre(s) méthode(s) de géolocalisation que la géolocalisation par adresse IP, le territoire correspondant à un point de géolocalisation d'adresses IP est proche des internautes dont l'adresse IP est géolocalisée en ce point, et pas nécessairement proche de ce point lui-même.

Selon une réalisation de la présente invention, l'au moins une autre méthode de géolocalisation est réalisée via un navigateur internet et un service de géolocalisation de ce navigateur intemet. En outre, selon une réalisation de la présente invention l'au moins une autre méthode de géolocalisation est réalisée via un navigateur internet et un service de géolocalisation de ce navigateur internet grâce à la technologie HTML5 ou une version ultérieure d'un système de langage HTML.

La géolocalisation s'effectuant via le navigateur internet et le service de géolocalisation de ce navigateur internet peut par exemple reposer sur le « Google Service Location® » (Google Inc., Mountain View, USA) ou sur le « Microsoft Service Location® » (Microsoft Corporation, Redmond, USA) ou sur le « Apple Location Service® » (Apple Inc., California, USA) ou encore sur d'autres services de géolocalisation.

La géolocalisation peut aussi utiliser des APIs ou Interfaces de Programmation. En particulier, la géolocalisation peut utiliser une ou plusieurs APIs de HTML5 ou d'un langage de balisage pour la création de pages internet.

Des navigateurs internet tels que Chrome® (Google Inc., Mountain View, USA), Firefox® (Mozilla Foundation, SeaMonkey, Mountain View, USA) et Opera® (Opera Software, Oslo) utilisent plus particulièrement le service de géolocalisation de « Google Location® » (Google Inc., Mountain View, USA).

Le navigateur internet « Internet Explorer® » (Microsoft Corporation, Redmond, USA) utilise plus particulièrement le service de géolocalisation de « Microsoft Location® » (Microsoft Corporation, Redmond, USA).

Le navigateur internet « Safari® » (Apple Inc., California, USA) utilise plus particulièrement le service de géolocalisation d'« Apple Location® » (Apple Inc., California, USA).

Il est bien entendu que d'autres navigateurs internet ainsi que d'autres services de géolocalisation associés à ces navigateurs internet peuvent être considérés dans le cadre de la présente invention.

Les services de géolocalisation permettent d'identifier au moins un SSID (« Service Set Identifier » ou nom d'un réseau sans fil correspondant à un numéro unique) et/ou d'identifier l'adresse IP et/ou de collecter des informations sur les pylônes 3G (troisième génération) et/ou picocellules ou femtocellules et/ou encore de définir les coordonnées GPS (« Global Positioning System ») et/ou GPRS (« General Packet Radio Service ») dudit internaute. Ces services de géolocalisation peuvent donc fournir une ou plusieurs de ces informations (IP, SSID, 3G, GPS) selon le navigateur internet.

De préférence, selon l'invention, le système de langage de balisage permettant la création de page web est un système de langage HTML 5.0 ou une version supérieure ou ultérieure d'un système de langage HTML (« Hypertext Markup Language »).

Cette géolocalisation via un navigateur internet et un service de géolocalisation de ce navigateur internet est précise à quelques dizaines ou quelques mètres près, ce qui permet de très bien géolocaliser des internautes et de disposer ainsi de données très précises sur les géolocalisations des internautes dont l'adresse IP est géolocalisée en un point de géolocalisation d'adresses IP.

Selon une réalisation de l'invention, l'au moins une autre méthode de géolocalisation se base sur une géolocalisation effectuée par un internaute qui spécifie lui-même sa géolocalisation. Cette réalisation de l'invention permet aussi de très bien géolocaliser les internautes et de disposer ainsi de données très précises sur les géolocalisations des internautes dont l'adresse IP est géolocalisée en un point de géolocalisation d'adresses IP.

Selon une réalisation de l'invention, un territoire correspondant à un point de géolocalisation d'adresses IP inclut substantiellement l'ensemble des internautes dont l'adresse IP est géolocalisée en ce point et qui sont géolocalisés par au moins une autre méthode de géolocalisation.

Dans cette réalisation de l'invention, un territoire correspondant à un point de géolocalisation d'adresses IP est une zone qui englobe pratiquement tous les internautes dont l'adresse IP est géolocalisée au point considéré et qui sont géolocalisés par au moins une autre méthode géolocalisation. Cela permet que les internautes géolocalisés uniquement par leur adresse IP aient une géolocalisation attribuée proche de leur localisation réelle car les territoires déterminés ainsi sont assez réalistes.

Selon une réalisation de l'invention, la détermination du territoire correspondant à un point de géolocalisation d'adresses IP comprend un traitement des données de géolocalisation. Un traitement des données de géolocalisation permet par exemple de ne pas prendre en compte un internaute trop éloigné des autres, ou de ne considérer que les zones où la densité d'internautes est au-delà d'un certain seuil pour déterminer les territoires. Il peut aussi comprendre un traitement statistique des données permettant par exemple de décider de la géolocalisation d'un internaute auquel il faut attribuer une géolocalisation.

Selon une réalisation de l'invention, le territoire correspondant à un point de géolocalisation d'adresses IP a la forme d'un cercle qui passe par les deux internautes les plus éloignés l'un de l'autre dont les adresses IP sont localisées audit point de géolocalisation d'adresses IP et qui sont aussi géolocalisés grâce à au moins une autre méthode de géolocalisation. Un territoire de forme circulaire tel que celui-là est particulièrement facile à déterminer.

Selon une réalisation de l'invention, un internaute dont l'adresse IP est géolocalisée en un point correspondant à un territoire jugé trop grand sur base d'un critère prédéfini se voit attribuer une géolocalisation à un niveau national. Selon une réalisation de l'invention, un internaute dont l'adresse IP est géolocalisée en un point correspondant à un territoire jugé trop grand sur base d'un critère prédéfini se voit attribuer une géolocalisation à un niveau non local. Si un territoire est trop grand pour une certaine application, l'attribution d'une géolocalisation sur celui-ci est trop imprécise pour remplir l'objectif de l'application. Par exemple si l'application de la méthode de géolocalisation est la diffusion d'annonces publicitaires locales, un territoire de plusieurs centaines de kilomètres peut ne pas avoir de sens. L'internaute se voit alors attribuer une géolocalisation à un niveau national ou à un niveau non local, par exemple régional, et il ne recevra pas les annonces publicitaires locales, mais bien des annonces publicitaires plus générales, comme des annonces publicitaires nationales ou régionales.

Avantageusement, la méthode de géolocalisation de la présente invention est adaptée pour un internaute ou des internautes utilisant au moins un des ordinateurs fixes et portables, des tablettes numériques, des téléphones portables (smartphones), des systèmes munis d'un système wifi, des téléviseurs digitaux, des radios et des systèmes de réalité augmentée. L'invention est intéressante à la fois pour des internautes surfant sur des supports fixes comme l'ordinateur de leur domicile ou de leur bureau, et qui sont concernés par les annonces publicitaires liées à un endroit où ils sont souvent et pour des internautes surfant sur des appareils mobiles qui pourraient être concernés par des produits ou services disponibles à l'endroit où ils se trouvent actuellement. Par exemple, un internaute utilisant des lunettes de réalité augmentée peut voir les annonces publicitaires avec les promotions des commerces qu'il croise.

L'invention comprend une méthode de géolocalisation pour la diffusion d'annonces publicitaires. L'invention comprend en particulier une méthode de géolocalisation pour la diffusion d'annonces publicitaires locales. Cela permet que l'internaute reçoive des annonces ciblées, par exemple liées à des points de vente proches de sa géolocalisation.

Dans une forme de réalisation particulière, des annonces publicitaires locales sont diffusées en priorité aux internautes géolocalisés de la façon la plus précise. Par exemple, les annonces publicitaires locales sont d'abord diffusées aux internautes ayant spécifié leur géolocalisation, ensuite aux internautes localisés par un navigateur internet et un service de géolocalisation de ce navigateur internet, et enfin aux internautes géolocalisés uniquement par leur adresse IP et auxquels une géolocalisation a été attribuée dans le territoire correspondant au point de géolocalisation de leur adresse IP. Cette réalisation de l'invention permet d'augmenter la probabilité qu'une annonce publicitaire soit diffusée à un internaute se trouvant réellement dans la zone de diffusion de ladite annonce publicitaire.

L'invention comprend avantageusement un produit programme d'ordinateur pour mettre en oeuvre la méthode selon l'invention.

L'invention comprend, en outre, un système de communication, et plus particulièrement un système de communication pour l'affichage d'annonces publicitaires, qui mettent en oeuvre une méthode de géolocalisation selon l'invention.

D'autres formes de réalisation du système suivant l'invention sont indiquées dans les revendications annexées.

### Brève description des figures

D'autres caractéristiques, détails et avantages de l'invention ressortiront de la description donnée ci-après, à titre non limitatif et en faisant référence aux dessins annexés.
La Figure 1 illustre un schéma d'un système de communication.
La Figure 2 illustre un schéma opérationnel d'un système de communication.
La Figure 3 illustre l'affichage d'une fenêtre publicitaire selon le système de communication.
La Figure 4 illustre une autre fenêtre publicitaire selon le système de communication.
La Figure 5 illustre un premier outil permettant à l'annonceur de définir la zone de diffusion de l'annonce publicitaire.
La Figure 6 illustre un deuxième outil permettant à l'annonceur de définir la zone de diffusion de l'annonce publicitaire.
La Figure 7 illustre un outil permettant à l'annonceur de créer son annonce en définissant une série de paramètres.
La Figure 8 est une vue schématique d'une zone englobant des points de géolocalisation d'adresses IP selon la présente invention.
La Figure 9 illustre la géolocalisation d'internautes dont l'adresse IP est géolocalisée sur un des points de géolocalisation d'adresses IP selon la présente invention.
La Figure 10 illustre un schéma opérationnel selon la présente invention.
La Figure 11 illustre une détermination de territoires correspondant à des points de géolocalisation d'adresses IP selon une réalisation de la présente invention.
La Figure 12 illustre une détermination de territoires correspondant à des points de géolocalisation d'adresses IP selon une autre réalisation de la présente invention.
La Figure 13 illustre une variation dans la détermination de territoires correspondant à des points de géolocalisation d'adresses IP selon une réalisation de la présente invention.
La Figure 14 illustre une attribution de géolocalisations à des internautes selon une réalisation de la présente invention.
La Figure 15 illustre l'attribution de géolocalisations à des internautes dans des territoires correspondant aux points de géolocalisation de leur adresse IP selon une autre réalisation de la présente invention.
La Figure 16 illustre un schéma opérationnel selon la présente invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. Dans les dessins, certaines éléments ne sont pas à l'échelle.

Dans les figures où un élément est représenté plusieurs fois, comme dans certaines figures représentant de nombreux internautes, le nombre de fois qu'un élément est présent n'est pas nécessairement proche du nombre de fois que ce élément est présent dans des réalisations de l'invention.

Sur les figures, les éléments identiques ou analogues peuvent porter les mêmes références.

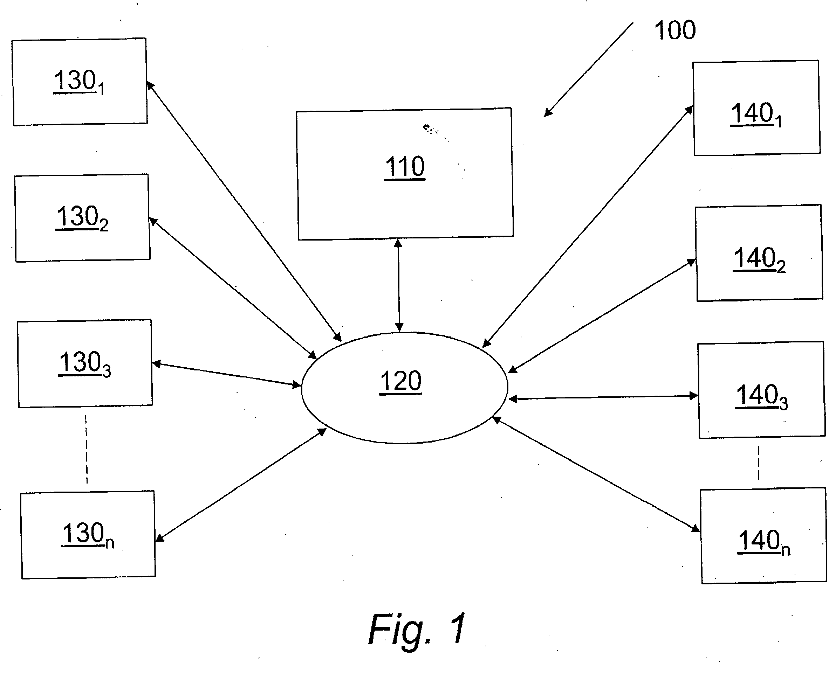

La Figure 1 illustre un système de communication 100. Le système 100 peut être considéré comme comprenant une plateforme d'un service provider 110 qui constitue l'interface avec internet 120 pour fournir une plateforme (non illustrée) avec laquelle peuvent interagir une multitude de fournisseurs de service et d'annonceurs 130₁, 130₂, 130₃, ..., 130ₙ (la lettre n peut être n'importe quel nombre entier). Une multitude d'internautes 140₁, 140₂, 140₃, ..., 140ₙ (la lettre n peut être n'importe quel nombre entier) surfant et utilisant internet 120 peuvent accéder à l'information "postée" par un fournisseur de service ou un annonceur 130₁, 130₂, 130₃, ..., 130ₙ sur les différents sites partenaires via internet 120. L'information «postée» comprend de préférence une information locale qui est une information relative à une zone géographique particulière définie par des coordonnées géographiques (longitude et latitude) prédéterminées par chaque internaute 140₁, 140₂, 140₃, ..., 140ₙ. Selon la géolocalisation de chaque internaute 140₁, 140₂, 140₃, ..., 140ₙ, différentes informations peuvent être fournies par le service provider 110 selon les conditions de l'abonnement auxquelles chaque fournisseur de service ou annonceur 130₁, 130₂, 130₃, ..., 130ₙ a souscrit.

Un internaute de la multitudes d'internautes 140₁, 140₂, 140₃, ..., 140ₙ surfant sur internet peut utiliser, de façon non limitative, un ordinateur fixe ou portable, une tablette numérique, un téléphone portable (smartphone), un système muni d'un système wifi, un téléviseur digital, un radio, ou un système de réalité augmentée comme les Google Glass (Google Inc., Mountain View, USA).

Même si la Figure 1 illustre que le service provider 110 interagit avec le fournisseur de service ou l'annonceur 130 via internet 120, il est envisagé que le service provider 110 et le fournisseur de service ou l'annonceur 130 peuvent interagir selon d'autres modalités, par exemple, par courrier, par téléphone, par e-mail, etc.

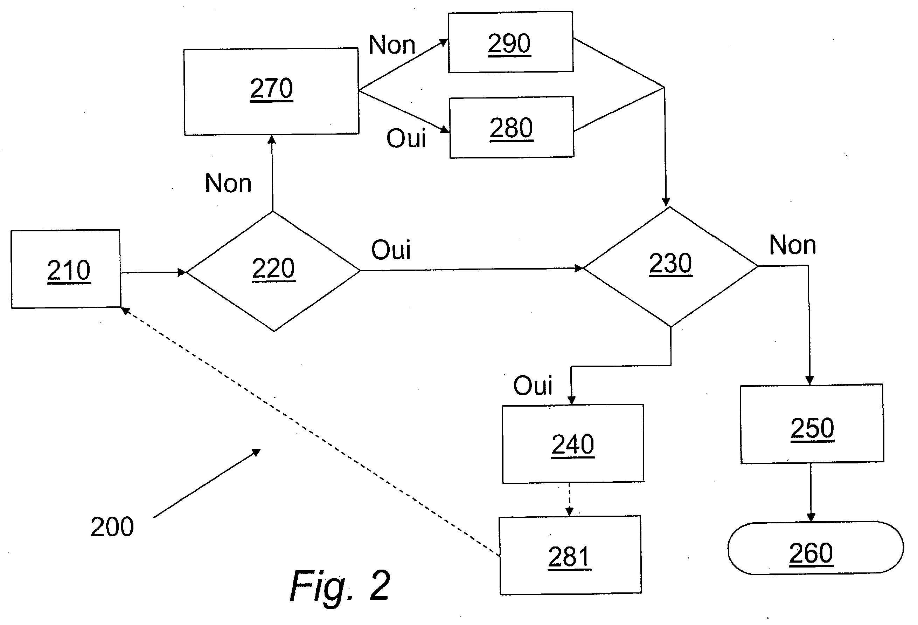

Là Figure 2 illustre un schéma opérationnel 200 d'un système de communication.

Selon une première voie selon le schéma opérationnel 200, suite à l'appel de la fenêtre publicitaire 210 sur le site internet consulté par l'internaute, le protocole de communication HTTP (protocole de transfert hypertexte) 220 est vérifié par le navigateur internet pour déterminer si l'internaute s'est déjà précédemment géolocalisé et possède déjà un cookie (témoin de connexion), ce qui permet de déterminer si la géolocalisation dudit internaute est déjà enregistrée dans un support de navigation, par exemple un ordinateur fixe ou portable, une tablette numérique, un téléphone portable ou un système de réalité augmentée. Si l'internaute a déjà été précédemment géolocalisé et si sa géolocalisation a déjà été enregistrée dans le système de communication, ledit système de communication va directement vérifier dans la base de données comprenant les annonces publicitaires 230 si une annonce locale 240 peut être affichée selon la géolocalisation précise de l'internaute. Si la géolocalisation de l'internaute correspond à une annonce publicitaire locale 240, alors cette annonce publicitaire locale 240 sera affichée.

Eventuellement, suite à l'affichage de ladite annonce publicitaire locale 240, si l'internaute le souhaite, il peut, en cliquant sur un bouton (« autre géolocalisation ») le renvoyant vers une plateforme où il peut modifier le cookie existant, modifier sa géolocalisation de façon plus précise en la spécifiant sur ladite plateforme 281, par exemple en spécifiant un code postal ou une adresse précise. Dans ce cas, le précédent cookie est effacé du support de navigation et remplacé par le nouveau qui est enregistré dans ledit support de navigation par l'intermédiaire de ladite plateforme 281. Suite à cette opération de changement du cookie, le système de communication repart de l'étape d'appel de la fenêtre, publicitaire 210.

Dans le cas contraire, si aucune annonce locale ne correspond à la géolocalisation de l'internaute, alors le système de communication va s'adresser à un programme secondaire 250 qui va permettre l'affichage d'une annonce publicitaire non locale 260, par exemple une annonce publicitaire nationale.

Selon une deuxième voie selon le schéma opérationnel 200, suite à l'appel de la fenêtre publicitaire 210 sur le site internet consulté par l'internaute, le protocole de communication HTTP 220 est vérifié par le navigateur internet pour déterminer si l'internaute s'est déjà précédemment géolocalisé et possède déjà un cookie (témoin de connexion), ce qui permet de déterminer si la géolocalisation dudit internaute est déjà enregistrée dans un support de navigation, par exemple un ordinateur fixe ou portable, une tablette numérique, un téléphone portable ou un système de réalité augmentée. Si l'internaute ne s'est pas encore géolocalisé précédemment et que, par conséquent, sa géolocalisation n'est pas encore connue par le navigateur intemet, ledit navigateur internet va adresser un pop-up (message) 270 demandant audit internaute s'il souhaite être géolocalisé. Si ledit internaute refuse d'être géolocalisé ou ignore le pop-up, le système de communication va quand même localiser l'internaute selon l'adresse IP 290 de sa connexion à un réseau informatique, ce qui aboutit à la création d'un cookie dont la durée de vie est variable selon le support de navigation. Par exemple, la durée de vie du cookie peut être plus courte pour un support de navigation mobile que pour un support de navigation fixe.

Cette géolocalisation par adresse IP peut se faire par exemple via une base de données de correspondance de Maxmind® (Maxmind de Waltham, Massachusetts, USA). Suite à cette géolocalisation de l'internaute selon son adresse IP 290, ledit système de communication va directement vérifier dans la base de données comprenant les annonces publicitaires 230 si une annonce locale 240 peut être affichée selon la géolocalisation de l'internaute. Si la géolocalisation de l'internaute correspond à une annonce publicitaire locale 240, alors cette annonce publicitaire locale 240 sera affichée.

Eventuellement, suite à l'affichage de ladite annonce publicitaire locale 240, si l'internaute le souhaite, il peut, en cliquant sur un bouton (« autre géolocalisation ») le renvoyant vers une plateforme où il peut modifier le cookie existant, modifier sa géolocalisation de façon plus précise en la spécifiant sur ladite plateforme 281, par exemple en spécifiant un code postal ou une adresse précise. Dans ce cas, le précédent cookie est effacé du support de navigation et remplacé par le nouveau qui est enregistré dans ledit support de navigation par l'intermédiaire de ladite plateforme 281. Suite à cette opération de changement du cookie, le système de communication repart de l'étape d'appel de la fenêtre publicitaire 210.

Dans le cas contraire, si aucune annonce locale ne correspond à la géolocalisation de l'internaute, alors le système de communication va s'adresser à un programme secondaire 250 qui va permettre l'affichage d'une annonce publicitaire non locale 260, par exemple une annonce publicitaire nationale.

Selon une troisième voie selon le schéma opérationnel 200, suite à l'appel de la fenêtre publicitaire 210 sur le site internet consulté par internaute, le protocole de communication HTTP 220 est vérifié par le navigateur internet pour déterminer si l'internaute s'est déjà précédemment géolocalisé et possède déjà un cookie (témoin de connexion), ce qui permet de déterminer si la géolocalisation dudit internaute est déjà enregistrée dans un support de navigation, par exemple un ordinateur fixe ou portable, une tablette numérique, un téléphone portable ou un système de réalité augmentée. Si l'internaute ne s'est pas encore géolocalisé précédemment et que, par conséquent, sa géolocalisation n'est pas encore connue par le navigateur internet, ledit navigateur internet va adresser un pop-up (message) 270 demandant audit internaute s'il souhaite être géolocalisé.

Si ledit internaute accepte d'être géolocalisé, sa géolocalisation est effectuée via le navigateur internet et son service de géolocalisation (« location service ») 280 permettant d'identifier au moins un SSID et/ou d'identifier l'adresse IP et/ou de collecter des informations sur les pylônes 3G, les femtocellules ou picocellules et/ou encore de définir les coordonnées GPS et/ou GPRS dudit internaute. L'acceptation sur le pop-up 270 aboutit à la création d'un cookie dont la durée de vie est variable selon le support de navigation. Par exemple, la durée de vie du cookie peut être plus courte pour un support de navigation mobile que pour un support de navigation fixe.

Suite à cette géolocalisation de l'internaute, ledit système de communication va directement vérifier dans la base de données comprenant les annonces publicitaires 230 si une annonce locale 240 peut être affichée selon la géolocalisation précise de l'internaute. Si la géolocalisation de l'internaute correspond à une annonce publicitaire locale 240, alors cette annonce publicitaire locale 240 sera affichée.

Eventuellement, suite à l'affichage de ladite annonce publicitaire locale 240, si l'internaute le souhaite, il peut, en cliquant sur un bouton (« autre géolocalisation ») le renvoyant vers une plateforme 281 où il peut modifier le cookie existant, modifier sa géolocalisation de façon plus précise en la spécifiant sur ladite plateforme 281, par exemple en spécifiant un code postal ou une adresse précise. Dans ce cas, le précédent cookie est effacé du support de navigation et remplacé par le nouveau qui est enregistré dans ledit support de navigation par l'intermédiaire de ladite plateforme 281. Suite à cette opération de changement du cookie, le système de communication repart de l'étape d'appel de la fenêtre publicitaire 210.

Dans le cas contraire, si aucune annonce locale ne correspond à la géolocalisation de l'internaute alors, le système de communication va s'adresser à un programme secondaire 250 qui va permettre l'affichage d'une annonce publicitaire non locale 260, par exemple une annonce publicitaire nationale.

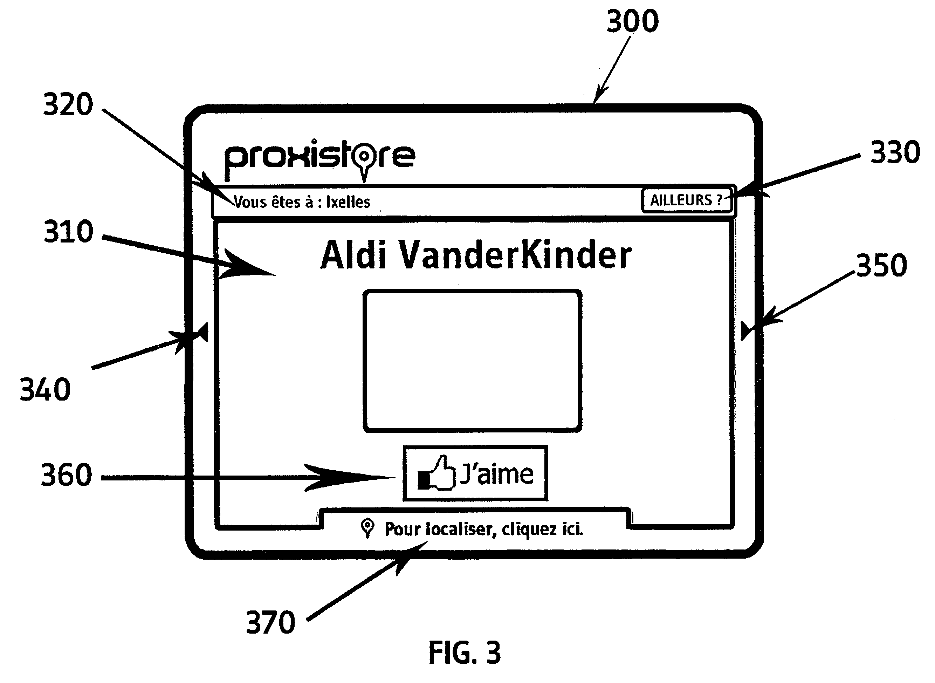

La Figure 3 illustre une fenêtre publicitaire 300. Cette fenêtre publicitaire 300 comprend l'annonce publicitaire 310 de l'annonceur ou du fournisseur de services, la mention de la localisation 320 de l'internaute, un lien 330 permettant de modifier la localisation de l'internaute, des flèches 340, 350 permettant de passer à une autre annonce ou de revenir à une précédente annonce déjà visionnée, un lien 360 permettant d'indiquer « like » sur Facebook et un lien 370 permettant de visionner la localisation précise de l'annonceur ou du fournisseur de services concerné par l'annonce publicitaire 310.

Le format de la fenêtre publicitaire 300 est adapté en fonction du support de navigation sur intemet. Il peut par exemple être différent pour un support de navigation fixe et un support de navigation mobile. Le format de la fenêtre publicitaire 300 peut être un format IMU ou autre en fonction du désir de l'annonceur et des formats prédéfinis sur les pages internet.

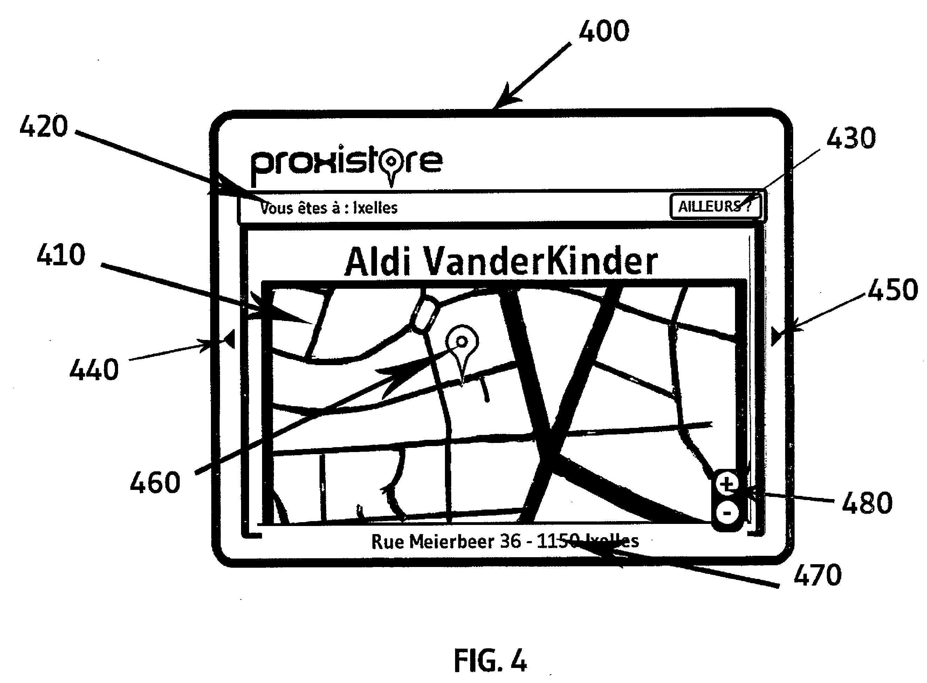

La Figure 4 illustre la fenêtre publicitaire 400 qui apparaît lorsque l'internaute utilise le lien 370 pour visionner la géolocalisation précise de l'annonceur ou du fournisseur de services concerné par l'annonce publicitaire 310. Cette fenêtre publicitaire 400 comprend un plan 410 permettent la géolocalisation de l'annonceur ou du fournisseur de services, la mention de la géolocalisation 420 de l'internaute, un lien 430 permettant de modifier la géolocalisation de l'internaute, des flèches 440, 450 permettant de passer à une autre annonce ou de revenir à une précédente annonce déjà visionnée, une balise 460 indiquant précisément la géolocalisation de l'annonceur ou du fournisseur de services, la mention de l'adresse précise 470 de l'annonceur ou du fournisseur de services et un bouton 480 permettant de zoomer ou de dézoomer dans le plan 420 afin de faciliter la géolocalisation de l'annonceur ou du fournisseur de services.

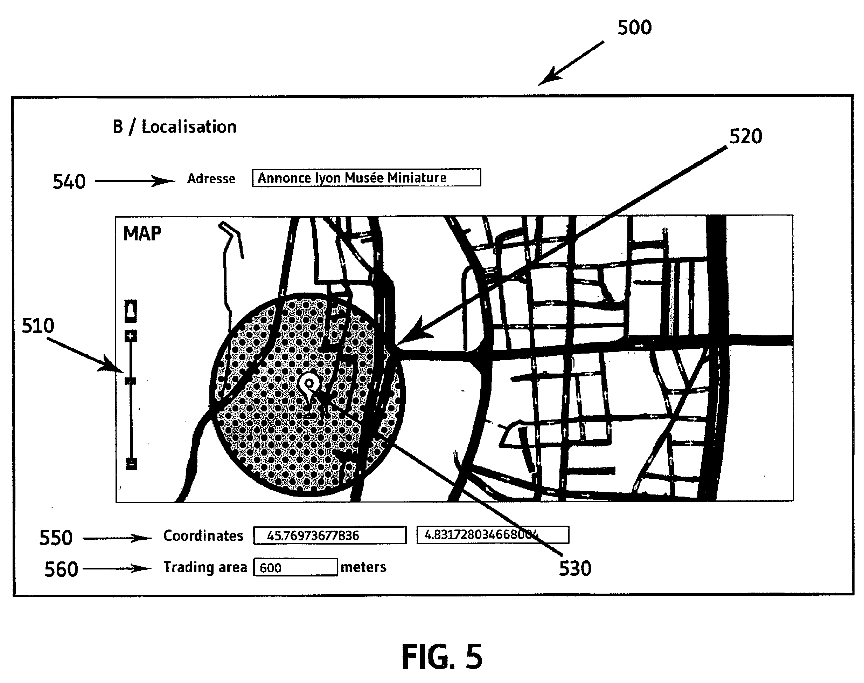

La Figure 5 illustre un outil 500 permettant à l'annonceur ou au fournisseur de service de définir l'endroit précis concerné par son annonce publicitaire en l'identifiant soit à l'aide d'une balise 520 sur un plan 510, soit en introduisant l'adresse 540 dudit endroit, soit en introduisant les coordonnées géographiques 550 dudit endroit. Une fois ledit endroit précisément défini, ledit outil permet à l'annonceur ou au fournisseur de service de définir la zone de diffusion 530 de son annonce publicitaire en définissant une zone de diffusion 530 par code postal ou par l'intermédiaire d'un cercle. La zone de diffusion 530 peut se situer autour de l'endroit concerné par l'annonce publicitaire ou ailleurs selon la cible de l'annonceur. La portée de la zone de diffusion en cercle est définie en mètres 560. Même si la Figure 5 illustre une zone d'action circulaire autour de l'endroit concerné par l'annonce publicitaire, il est entendu que cette forme circulaire de la zone d'action peut avoir beaucoup de formes différentes et que cette zone peut être, par exemple, de forme triangulaire ou rectangulaire, etc. La zone de diffusion peut être calculée à partir d'un point (la géolocalisation du magasin) et d'un temps de parcours pour que l'internaute arrive à ce point. Par exemple, l'annonceur peut décider que la zone de diffusion est un espace tel qu'un internaute situé dans cet espace met moins de 15 minutes pour arriver à son magasin.

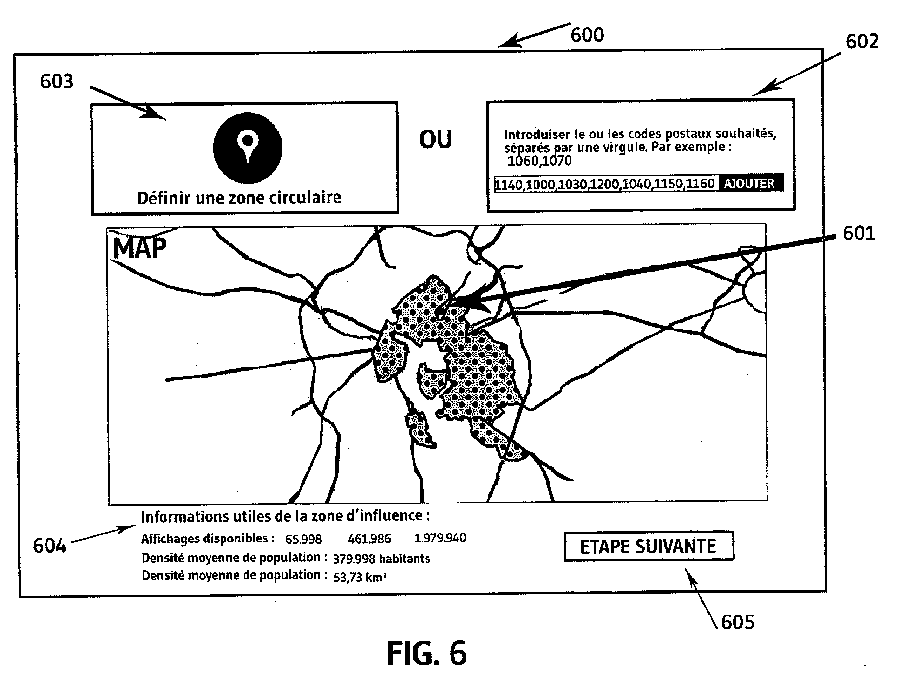

La Figure 6 illustre un outil 600 permettant à l'annonceur ou au fournisseur de service de définir l'endroit ou la zone de diffusion 601 relative à son annonce selon l'introduction de codes postaux 602. La possibilité de définir une zone circulaire est toujours offerte 603. Un cadre 604 permet à l'annonceur de disposer d'informations complémentaires comme du nombre d'affichages disponibles dans la zone définie (par jour, par semaine et par mois), la densité moyenne de la population dans la zone définie et la superficie de la zone définie. Un bouton 605 permet à l'annonceur de passer à l'étape suivante de création de son annonce, une fois la zone de diffusion 601 définie.

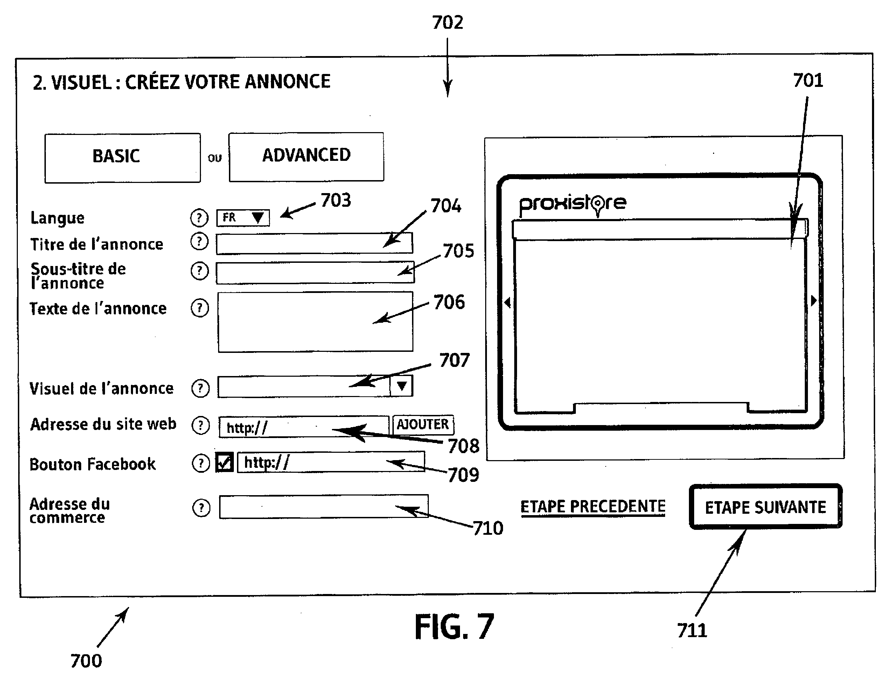

La Figure 7 illustre un outil 700 permettant à l'annonceur de créer son annonce en définissant une série de paramètres. Cet outil 700 comprend une première zone 701 et une deuxième zone 702. La première zone 701 permet à l'annonceur de visualiser son annonce selon les paramètres qu'il introduit dans la deuxième zone 702. Plusieurs zones de texte 703 à 710 permettent à l'annonceur de définir toute une série de paramètres : langue, titre de l'annonce, sous-titre de l'annonce, texte de l'annonce, visuel de l'annonce (image), adresse URL d'un site internet, bouton Facebook, adresse du commerce (point de vente). Un bouton 711 permet à l'annonceur de passer à l'étape suivante de création de son annonce.

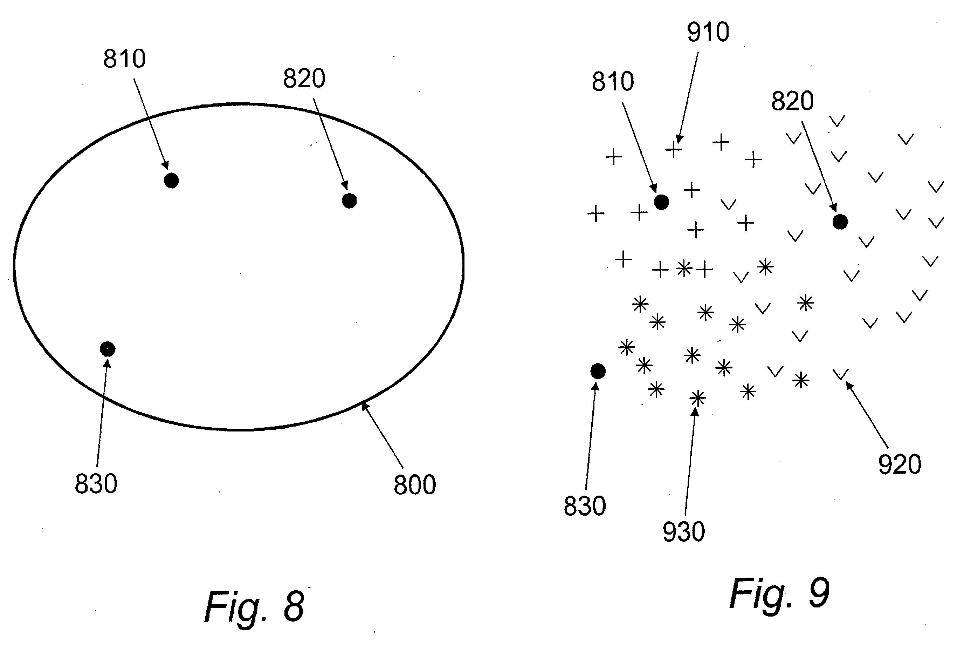

La Figure 8 est une vue schématique d'une zone 800 englobant des points de géolocalisation d'adresses IP. Une géolocalisation peut être attribuée par adresse IP, mais souvent les adresses IP d'internautes se trouvant sur un large territoire sont géolocalisées de façon groupée au même point de latitude et de longitude. Les adresses IP sont en fait agrégées en des points de géolocalisation d'adresses IP. Sur l'exemple de la Figure 8, seulement trois points 810, 820, 830 de géolocalisation d'adresses IP apparaissent sur une certaine région 800 alors que des internautes sont en réalités présents dans l'ensemble de la région 800.

La Figure 9 illustre la géolocalisation d'internautes dont l'adresse IP est géolocalisée sur un des points de géolocalisation d'adresses IP. La Figure 9 représente par des croix (« X ») les internautes 910 dont l'adresse IP est géolocalisée au point de géolocalisation d'adresses IP 810 et qui sont aussi géolocalisés grâce à leur navigateur internet et leur service de géolocalisation 280 (voir la Figure 2), à la spécification de leur position sur une plateforme 281, ou à une autre méthode de géolocalisation ; par des « V » les internautes 920 dont l'adresse IP est géolocalisée au point de géolocalisation d'adresses IP 820 et qui sont aussi géolocalisés grâce à leur navigateur internet et leur service de géolocalisation 280, à la spécification de leur position sur une plateforme 281, ou à une autre méthode de géolocalisation ; et par des astérisques (« * ») les internautes 930 dont l'adresse IP est géolocalisée au point de géolocalisation d'adresses IP 830 et qui sont aussi géolocalisés grâce à leur navigateur internet et leur service de géolocalisation 280, à la spécification de leur position sur une plateforme 281, ou à une autre méthode de géolocalisation.

Les internautes 910 apparaissent comme présents sur un certain territoire, qui n'est pas nécessairement inclus dans la région 800 (voir la Figure 8). De même les internautes 920 apparaissent comme présents sur un certain territoire, qui n'est pas nécessairement inclus dans la région 800 ; et ainsi de suite pour les internautes 930 qui apparaissent comme présents sur un certain territoire, qui n'est pas nécessairement inclus dans la région 800.

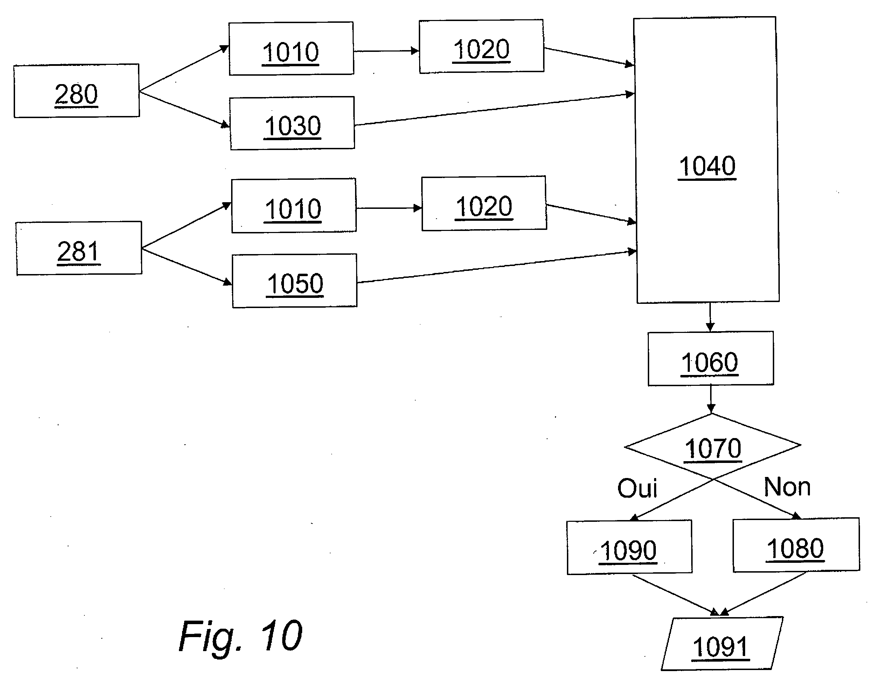

La Figure 10 illustre un schéma opérationnel permettant la création d'une base de données selon la présente invention. Lorsqu'un internaute accepte d'être géolocalisé par son navigateur internet et son service de géolocalisation 280, son adresse IP 1010 est utilisée pour déterminer le point de géolocalisation 1020 de son adresse IP. Une base de données 1040 enregistre alors la géolocalisation 1020 de son adresse IP. La géolocalisation 1030 déterminée par son navigateur internet et son service de géolocalisation est aussi enregistrée dans la base de données 1040.

Lorsqu'un internaute accepte d'être géolocalisé en spécifiant sa géolocalisation 281, son adresse IP 1010 est utilisée pour déterminer le point de géolocalisation 1020 de son adresse IP. Une base de données 1040 enregistre alors la géolocalisation 1020 de son adresse IP. La géolocalisation 1050 spécifiée par l'internaute est aussi enregistrée dans la base de données 1040.

Une étape 1060 de détermination des territoires est alors effectuée. Grâce aux données de la base de données 1040, le point 810 de géolocalisation d'adresses IP (voir la Figure 9) est associé aux géolocalisations des internautes 910 géolocalisés grâce à leur navigateur internet et leur service de géolocalisation 280 ou à la spécification de leur position sur une plateforme 281 et dont l'adresse IP est géolocalisée au point 810. De la même façon, grâce aux données de la base de données 1040, le point 820 de géolocalisation d'adresses IP est associé aux géolocalisations des internautes 920 géolocalisés grâce à leur navigateur internet et leur service de géolocalisation 280 ou à la spécification de leur position sur une plateforme 281 et dont l'adresse IP est géolocalisée au point 820, et ainsi de suite pour tous les points de géolocalisation d'adresses IP considérés, comme le point 830.

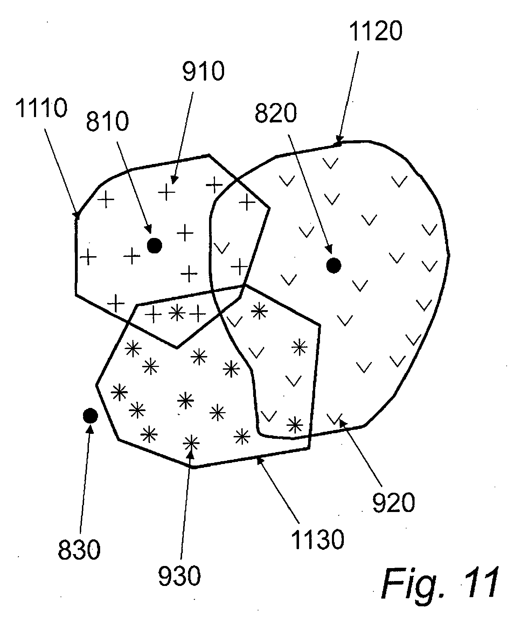

Les paragraphes suivants décrivent différentes façons de réaliser l'étape 1060 de déterminations des territoires selon des réalisations de la présente invention, et avec le support des Figures 11 à 13. La suite de la Figure 10 sera décrite après.

La Figure 11 illustre la détermination de territoires correspondant aux points de géolocalisation d'adresses IP selon une réalisation de la présente invention. Un territoire couvert par les internautes 910 est considéré comme le territoire 1110 correspondant au point 810 de géolocalisation d'adresses IP. Autrement dit, le territoire 1110 est un territoire qui englobe substantiellement tous les internautes 910 dont l'adresse IP est géolocalisée au point 810 et qui sont géolocalisés par au moins une autre méthode géolocalisation. Il en va de même pour le point 820 de géolocalisation d'adresses IP : le territoire 1120 est un territoire qui englobe substantiellement tous les internautes 920 dont l'adresse IP est géolocalisée au point 820 et qui sont géolocalisés par au moins une autre méthode de géolocalisation. Il en va de même pour le point 830 de géolocalisation d'adresses IP : le territoire 1130 est un territoire qui englobe substantiellement tous les internautes 930 dont l'adresse IP est géolocalisée au point 830 et qui sont géolocalisés par au moins une autre méthode de géolocalisation, et ainsi de suite pour tous les points de géolocalisation d'adresses IP considérés.

Selon une réalisation de la présente invention, le territoire 1110, 1120, 1130 a une forme géométrique prédéterminée adaptée pour couvrir substantiellement tous les internautes 910, 920, 930 dont l'adresse IP est géolocalisée au point 810, 820, 830 et qui sont géolocalisés par au moins une autre méthode géolocalisation. Par exemple, le territoire 1110, 1120, 1130 peut avoir la forme d'un ensemble de polygones, pas nécessairement contigus, qui couvre substantiellement tous les internautes 910, 920, 930 dont l'adresse IP est géolocalisée au point 810, 820, 830 et qui sont géolocalisés par au moins une autre méthode géolocalisation. Il est bien entendu que toutes les formes de territoires sont possibles, y compris cercle, ellipse, polygone, ou ensemble ou combinaison de ceux-ci.

Il peut arriver qu'un point de géolocalisation d'adresses IP soit situé en-dehors du territoire lui correspondant, comme c'est le cas pour le point 830 situé en-dehors du territoire 1130 à la Figure 11.

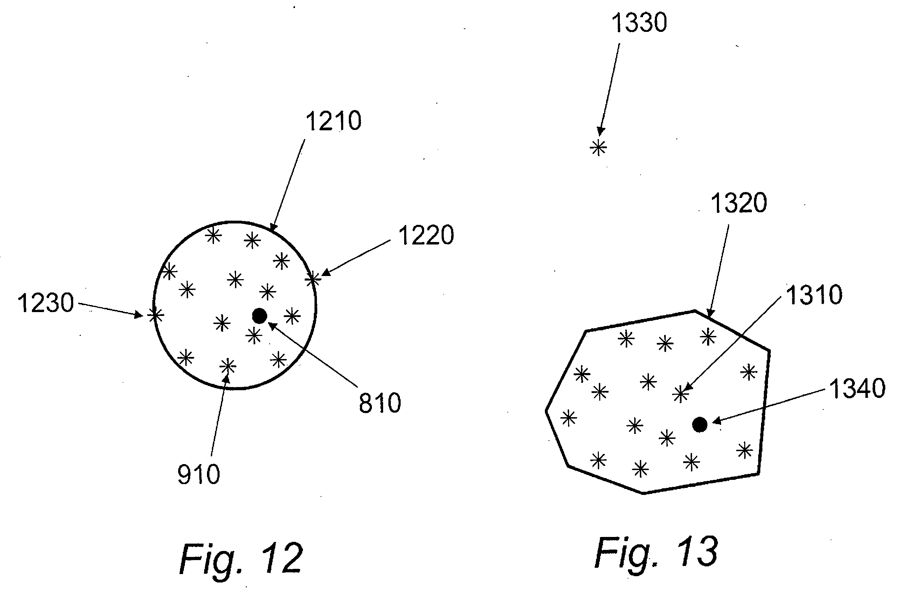

La Figure 12 illustre la détermination de territoires correspondant aux points de géolocalisation d'adresses IP selon une autre réalisation de la présente invention. Le territoire d'un point de géolocalisation d'adresses IP 810 peut avoir la forme d'un cercle 1210 qui passent par les deux internautes 1220, 1230 les plus éloignés l'un de l'autre dont les adresses IP sont localisées au point 810 et qui sont aussi géolocalisés grâce à une autre méthode de géolocalisation.

L'étape 1060 de détermination des territoires peut comprendre un traitement des données.

La Figure 13 illustre une variation dans le traitement des données pour la détermination de territoires correspondant aux points de géolocalisation d'adresses IP selon une réalisation de la présente invention. L'étape 1060 (voir la Figure 10) de détermination des territoires peut comprendre un traitement des données afin, par exemple, de ne pas prendre en compte un internaute 1330 trop éloigné des autres 1310 dans la détermination du territoire 1320 correspondant au point 1340 de géolocalisation d'adresses IP, ou à exclure une zone peu peuplée comme une forêt ou une étendue d'eau.

Selon une réalisation de la présente invention, l'étape 1060 de détermination des territoires comprend un traitement statistique des données. Ce traitement statistique peut par exemple comprendre de ne considérer que les zones où la densité d'internautes est au-delà d'un certain seuil pour déterminer les territoires.

Selon une réalisation de la présente invention, l'étape 1060 de détermination des territoires est effectuée à intervalles réguliers, ces intervalles étant en général, et de façon non limitante, compris entre quelques minutes et quelques mois.

Revenant à la Figure 10, selon une réalisation de la présente invention, l'étape 1060 de détermination des territoires est suivie par une étape de vérification de la taille des territoires 1070. Si un territoire correspondant à un point de géolocalisation d'adresse IP est trop grand 1080, une publicité locale peut ne pas être pertinente sur l'ensemble de ce territoire. Le décision de considérer le territoire comme « trop grand » se base sur un critère objectif, par exemple la superficie. Dans ce cas, si le territoire est trop grand, il est appelé « non local ». Cela peut se produire par exemple lorsque des adresses IP de l'ensemble d'un pays sont géolocalisées au même point de géolocalisation d'adresses IP. Un territoire non local est donc un territoire trop grand pour qu'une publicité locale y soit pertinente. Un territoire national est un exemple de territoire non local. Un territoire de plusieurs centaines de kilomètres peut être un territoire non local, cela dépend de la définition du critère jugeant que le territoire est « trop grand ».

Si un territoire correspondant à un point de géolocalisation d'adresse IP n'est pas trop grand 1090, les internautes dont l'adresse IP est géolocalisée en ce point et qui sont géolocalisés uniquement par leur adresse IP se verront attribuer une géolocalisation sur ce territoire par la suite.

Les informations sur les points de géolocalisation d'adresse IP, incluant leurs coordonnées en latitude et longitude, les territoires leur correspondant et le fait que ces territoires soient ou non « trop grands » sont enregistrées dans une base de données 1091.

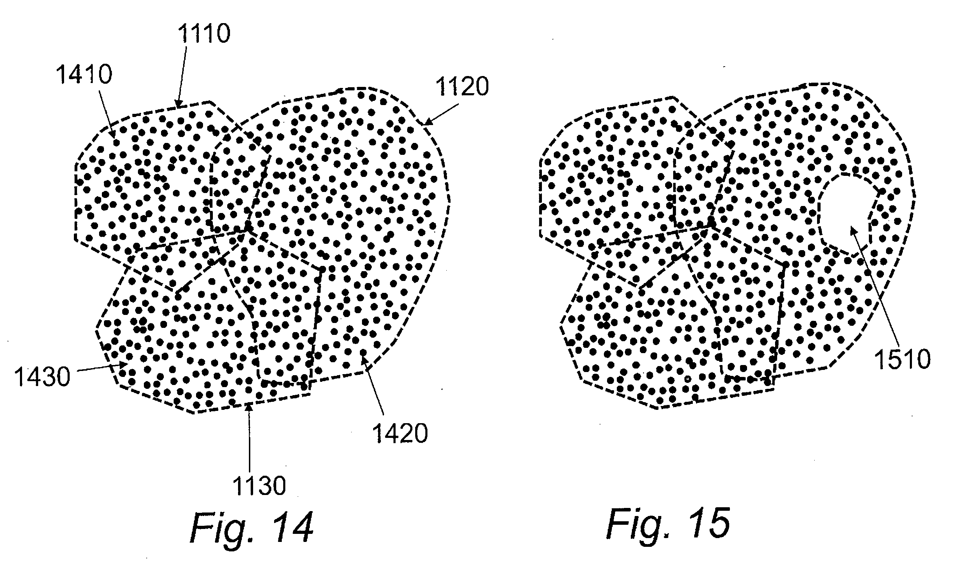

La Figure 14 illustre l'attribution de géolocalisations à des internautes dans des territoires correspondant aux points de géolocalisation de leur adresse IP selon une réalisation de la présente invention. Une fois qu'un territoire 1110 correspondant au point 810 de géolocalisation d'adresses IP a été déterminé lors de l'étape 1060 (la Figure 10) et si ce territoire n'a pas été jugé comme trop grand lors de l'étape de vérification 1070, une géolocalisation 1410 sur le territoire 1110 est attribuée à tout internaute dont l'adresse IP est géolocalisée au point 810 et qui n'est pas géolocalisé par une autre méthode de géolocalisation que la géolocalisation de son adresse IP.

De la même façon, une fois qu'un territoire 1120 correspondant au point 820 de géolocalisation d'adresses IP a été déterminé lors de l'étape 1060 et si ce territoire n'a pas été jugé comme trop grand lors de l'étape de vérification 1070, une géolocalisation 1420 sur le territoire 1120 est attribuée à tout internaute dont l'adresse IP est géolocalisée au point 820 et qui est géolocalisé uniquement par son adresse IP.

De la même façon, une fois qu'un territoire 1130 correspondant au point 830 de géolocalisation d'adresses IP a été déterminé lors de l'étape 1060 et si ce territoire n'a pas été jugé comme trop grand lors de l'étape de vérification 1070, une géolocalisation 1430 sur le territoire 1130 est attribuée à tout internaute dont l'adresse IP est géolocalisée au point 830 et qui est géolocalisé uniquement par son adresse IP, et ainsi de suite.

La Figure 14 représente par des points les géolocalisations attribuées aux internautes 1410, 1420, 1430 dont l'adresse IP est géolocalisée aux points de géolocalisation d'adresses IP 810, 820, 830 (voir les Figures 8, 9 et 11) et qui sont géolocalisés uniquement par leur adresse IP.

Selon une réalisation de la présente invention, l'attribution d'une géolocalisation à un internaute sur le territoire correspondant au point de géolocalisation de son adresse IP se fait de façon à obtenir une distribution substantiellement homogène des géolocalisations des internautes.

Selon une réalisation de la présente invention, l'attribution d'une géolocalisation à un internaute sur le territoire correspondant au point de géolocalisation de son adresse IP se fait de façon à obtenir une distribution des géolocalisations des internautes plus homogène qu'un groupement de tous les internautes en un seul point.

Selon une réalisation de la présente invention, l'attribution d'une géolocalisation à un internaute sur le territoire correspondant au point de géolocalisation de son adresse IP se fait de façon aléatoire.

Selon une réalisation de la présente invention, l'attribution d'une géolocalisation à un internaute sur le territoire correspondant au point de géolocalisation de son adresse IP se fait de façon à obtenir une distribution harmonieuse des géolocalisations des internautes. Par exemple, un territoire correspondant à un point de géolocalisation d'adresses IP peut être divisé en plusieurs sous-territoires dans lesquels la densité de géolocalisations d'internautes est évaluée. Si une géolocalisation doit être attribuée à un nouvel internaute, cette géolocalisation sera préférentiellement choisie dans le sous-territoire de plus basse densité de géolocalisations.

Selon des réalisations de la présente invention, la distribution des géolocalisations des internautes est sensiblement uniforme, ou tient compte de paramètres extérieurs comme la densité de population ou la densité de trafic.

Selon une réalisation de la présente invention, l'attribution d'une géolocalisation à un internaute sur le territoire correspondant au point de géolocalisation de son adresse IP se fait sur l'ensemble du territoire.

La Figure 15 illustre l'attribution de géolocalisations à des internautes dans des territoires correspondant aux points de géolocalisation de leur adresse IP selon une autre réalisation de la présente invention. L'attribution d'une géolocalisation à un internaute sur le territoire correspondant au point de géolocalisation de son adresse IP peut exclure une partie 1510 du territoire comme une étendue d'eau ou une forêt.

Selon une réalisation de la présente invention, l'attribution d'une géolocalisation à un internaute sur le territoire correspondant au point de géolocalisation de son adresse IP prend en compte la superposition de différents territoires correspondant à différents points de géolocalisation d'adresses IP pour répartir les géolocalisations des internautes harmonieusement, et en particulier, pour éviter une densité de géolocalisations d'internautes trop élevée dans les régions de superposition de plusieurs territoires correspondant à plusieurs points de géolocalisation d'adresses IP. Par exemple, la densité de géolocalisations dans la zone de superposition peut être évaluée et comparée à la densité de géolocalisations moyenne d'un territoire ou d'un ensemble de territoires et si une géolocalisation doit être attribuée à un nouvel internaute, cette géolocalisation ne sera pas choisie dans la zone de superposition si la densité de géolocalisations de celle-ci est substantiellement plus élevée que la densité de géolocalisations moyenne du territoire ou de l'ensemble de territoires. Cette réalisation de l'invention résout un problème qui pourrait survenir lorsque des territoires correspondant à différents points de géolocalisation d'adresses IP se superposent. Si l'attribution de la géolocalisation de l'internaute ne prend en compte que le territoire correspondant à son adresse IP et les autres internautes dont l'adresse IP est géolocalisée au même point que lui, autrement dit, si l'attribution ne prend pas en compte les autres territoires, les zones où plusieurs territoires correspondant à plusieurs adresses IP se superposent auront une densité d'internautes supérieure aux zones où un seul territoire existe.

Avantageusement, dans une réalisation de l'invention, l'attribution à l'internaute d'une géolocalisation sur le territoire correspondant au point de géolocalisation de son adresse IP prend en compte des données de l'internaute. Ces données peuvent venir du fournisseur d'accès de l'internaute, comme son adresse IP, d'un formulaire que l'internaute a rempli précédemment, d'un cookie ou d'une autre source. Elles peuvent donner des indications sur la géolocalisation probable de l'internaute. Par exemple, un internaute se trouvant proche de la frontière franco-belge mais utilisant un fournisseur d'accès belge est plus probablement en Belgique qu'en France, ou s'il surfe sur un site d'extension .be, il est aussi plus probablement en Belgique qu'en France.

Selon une réalisation de la présente invention, l'attribution d'une géolocalisation à un internaute sur le territoire correspondant au point de géolocalisation de son adresse IP prend en compte la langue qu'utilise l'internaute sur internet afin de déterminer de quel côté d'une frontière linguistique lui est attribué sa géolocalisation.

Selon une réalisation de la présente invention, l'attribution d'une géolocalisation à un internaute sur le territoire correspondant au point de géolocalisation de son adresse IP prend en compte l'origine, par exemple l'extension du nom de domaine, du site sur lequel surfe l'internaute pour lui attribuer une géolocalisation.

Selon une réalisation de la présente invention, l'attribution d'une géolocalisation à un internaute sur le territoire correspondant au point de géolocalisation de son adresse IP prend en compte la densité d'internautes localisés grâce à leur navigateur internet et leur service de géolocalisation 280 ou à la spécification de leur position sur une plateforme 281 (voir la Figure 10).

Si un territoire correspondant à un point de géolocalisation a été jugé comme trop grand 1080 lors de l'étape de vérification 1070, tout internaute dont l'adresse IP est géolocalisée en ce point et qui est géolocalisé uniquement par son adresse IP ne se voit pas attribuer de géolocalisation précise, mais est considéré comme un internaute d'un territoire non local pour lequel la publicité locale n'est pas pertinente. Cet internaute ne recevra donc par d'annonces publicitaires locales mais des annonces publicitaires « non locales », comme par exemple des annonces publicitaires nationales ou régionales.

D'autres paramètres peuvent être pris en compte lors de l'attribution d'une géolocalisation à un internaute sur le territoire correspondant au point de géolocalisation de son adresse IP et, il est entendu que la présente invention n'est en aucun cas limitée par les réalisations de l'invention citées ci-dessus.

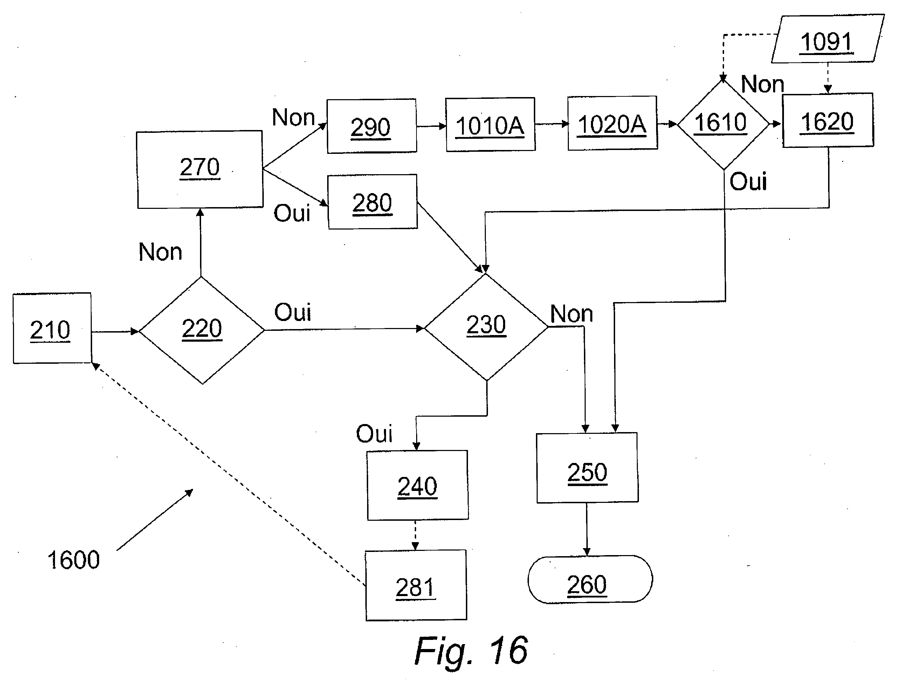

La Figure 16 illustre un schéma opérationnel 1600 d'un système de communication selon la présente invention. Selon une première voie selon le schéma opérationnel 1600, suite à l'appel de la fenêtre publicitaire 210 sur le site internet consulté par l'internaute, le protocole de communication HTTP (protocole de transfert hypertexte) 220 est vérifié par le navigateur internet pour déterminer si l'internaute s'est déjà précédemment géolocalisé et possède déjà un cookie (témoin de connexion), ce qui permet de déterminer si la géolocalisation dudit internaute est déjà enregistrée dans un support de navigation, par exemple un ordinateur fixe ou portable, une tablette numérique, un téléphone portable ou un système de réalité augmentée. Si l'internaute a déjà été précédemment géolocalisé et si sa géolocalisation a déjà été enregistrée dans le système de communication, ledit système de communication va directement vérifier dans la base de données comprenant les annonces publicitaires 230 si une annonce locale 240 peut être affichée selon la géolocalisation précise de l'internaute. Si la géolocalisation de l'internaute correspond à une annonce publicitaire locale 240 alors, cette annonce publicitaire locale 240 sera affichée.

Eventuellement, suite à l'affichage de ladite annonce publicitaire locale 240, si l'internaute le souhaite, il peut, en cliquant sur un bouton (« autre géolocalisation ») le renvoyant vers une plateforme où il peut modifier le cookie existant, modifier sa géolocalisation de façon plus précise en la spécifiant sur ladite plateforme 281, par exemple en spécifiant un code postal ou une adresse précise. Dans ce cas, le précédent cookie est effacé du support de navigation et remplacé par le nouveau qui est enregistré dans ledit support de navigation par l'intermédiaire de ladite plateforme 281. Suite à cette opération de changement du cookie, le système de communication selon l'invention repart de l'étape d'appel de la fenêtre publicitaire 210.

Comme illustré à la Figure 10, l'adresse IP 1010 de l'internaute est utilisée pour déterminer la géolocalisation 1020 de son adresse IP, et la base de données 1040 enregistre alors la géolocalisation 1020 de son adresse IP ainsi que la géolocalisation 1050 spécifiée par l'internaute. En-dehors de ces étapes relatives à la Figure 10 et qui concernent la collecte d'information pour la base de données 1040, la première voie selon le schéma opérationnel 1600 est similaire à la première voie selon le schéma opérationnel 200 illustré à la Figure 2.

Dans le cas contraire, si aucune annonce locale ne correspond à la géolocalisation de l'internaute alors, le système de communication va s'adresser à un programmé secondaire 250 qui va permettre l'affichage d'une annonce publicitaire nationale 260.

Selon une deuxième voie selon le schéma opérationnel 1600, suite à l'appel de la fenêtre publicitaire 210 sur le site internet consulté par l'internaute, le protocole de communication HTTP 220 est vérifié par le navigateur internet pour déterminer si l'internaute s'est déjà précédemment géolocalisé et possède déjà un cookie (témoin de connexion), ce qui permet de déterminer si la géolocalisation dudit internaute est déjà enregistrée dans un support de navigation, par exemple un ordinateur fixe ou portable, une tablette numérique, un téléphone portable ou un système de réalité augmentée. Si l'internaute ne s'est pas encore géolocalisé précédemment et que, par conséquent, sa géolocalisation n'est pas encore connue par le navigateur internet, ledit navigateur internet va adresser un pop-up (message) 270 demandant audit internaute s'il souhaite être géolocalisé. Si ledit internaute refuse d'être géolocalisé ou ignore le pop-up, le système de communication va utiliser l'adresse IP 1010A dudit internaute pour déterminer le point 1020A de géolocalisation de son adresse IP.

Une étape de vérification 1610 vérifie si le point 1020A de géolocalisation de l'adresse IP de l'internaute est connu pour regrouper des adresses IP localisées sur un trop grand territoire 1080 (voir la Figure 10). Cette étape de vérification 1610 est basée sur les données contenues dans la base de données 1091. Si le territoire est trop grand, une publicité locale peut ne pas être pertinente sur l'ensemble de ce territoire et le système de communication va s'adresser à un programme secondaire 250 qui va permettre l'affichage d'une annonce publicitaire non locale 260. Si le point 1020A de géolocalisation de l'adresse IP de l'internaute n'est pas connu pour regrouper des adresses IP localisées sur un trop grand territoire 1090, une géolocalisation 1620 sur le territoire correspondant au point de géolocalisation de son adresse IP est attribuée audit internaute.

L'adresse IP d'un internaute qui a été identifiée à l'étape 1610 comme géolocalisée sur un point regroupant des adresses IP localisées sur un trop grand territoire 1080 (voir la Figure 10), ou qui a été identifiée à l'étape 1610 comme géolocalisée sur un point regroupant des adresses IP localisées sur un territoire jugé non «trop grand » 1090 déterminé à l'étape 1060 est dite « qualifiée ».

La géolocalisation 1620 attribuée à l'internaute aboutit à la création d'un cookie dont la durée de vie est variable selon le support de navigation. Par exemple, la durée de vie du cookie peut être plus courte pour un support de navigation mobile que pour un support de navigation fixe.

Suite à cette géolocalisation 1620 attribuée à l'internaute, ledit système de communication va directement vérifier dans la base de données comprenant les annonces publicitaires 230 si une annonce locale 240 peut être affichée selon la géolocalisation 1620 attribuée à l'internaute. Si la géolocalisation 1620 attribuée à l'internaute correspond à une annonce publicitaire locale 240 alors, cette annonce publicitaire locale 240 sera affichée.

Eventuellement, suite à l'affichage de ladite annonce publicitaire locale 240, si l'internaute le souhaite, il peut, en cliquant sur un bouton (« autre géolocalisation ») le renvoyant vers une plateforme où il peut modifier le cookie existant, modifier sa géolocalisation de façon plus précise en la spécifiant sur ladite plateforme 281, par exemple en spécifiant un code postal ou une adresse précise. Dans ce cas, le précédent cookie est effacé du support de navigation et remplacé par le nouveau qui est enregistré dans ledit support de navigation par l'intermédiaire de ladite plateforme 281. Suite à cette opération de changement du cookie, le système de communication selon l'invention repart de l'étape d'appel de la fenêtre publicitaire 210.

Comme illustré à la Figure 10, l'adresse IP 1010 de l'internaute est utilisée pour déterminer la géolocalisation 1020 de son adresse IP, et la base de données 1040 enregistre alors la géolocalisation 1020 de son adresse IP ainsi que la géolocalisation 1050 spécifiée par l'internaute.

Dans le cas contraire, si aucune annonce locale ne correspond à la géolocalisation de l'internaute alors, le système de communication va s'adresser à un programme secondaire 250 qui va permettre l'affichage d'une annonce publicitaire nationale 260.

Selon une troisième voie selon le schéma opérationnel 1600, suite à l'appel de la fenêtre publicitaire 210 sur le site internet consulté par l'internaute, le protocole de communication HTTP 220 est vérifié par le navigateur internet pour déterminer si l'internaute s'est déjà précédemment géolocalisé et possède déjà un cookie (témoin de connexion), ce qui permet de déterminer si la géolocalisation dudit internaute est déjà enregistrée dans un support de navigation, par exemple un ordinateur fixe ou portable, une tablette numérique, un téléphone portable ou un système de réalité augmentée. Si l'internaute ne s'est pas encore géolocalisé précédemment et que, par conséquent, sa géolocalisation n'est pas encore connue par le navigateur internet, ledit navigateur internet va adresser un pop-up (message) 270 demandant audit internaute s'il souhaite être géolocalisé. Si ledit internaute accepte d'être géolocalisé, sa géolocalisation est effectuée via le navigateur internet et son service de géolocalisation (« location service ») 280 permettant d'identifier au moins un SSID et/ou d'identifier l'adresse IP et/ou de collecter des informations sur les pylônes 3G et/ou picocellules ou femtocellules et/ou encore de définir les coordonnées GPS et/ou GPRS dudit internaute. L'acceptation du pop-up 270 aboutit à la création d'un cookie dont la durée de vie est variable selon le support de navigation. Par exemple, la durée de vie du cookie peut être plus courte pour un support de navigation mobile que pour un support de navigation fixe.

Comme illustré à la Figure 10, l'adresse IP 1010 de l'internaute est utilisée pour déterminer la géolocalisation 1020 de son adresse IP, et la base de données 1040 enregistre alors la géolocalisation 1020 de son adresse IP ainsi que la géolocalisation 1030 déterminée par le navigateur internet de l'internaute.

Suite à cette géolocalisation de l'internaute, ledit système de communication va directement vérifier dans la base de données comprenant les annonces publicitaires 230 si une annonce locale 240 peut être affichée selon la géolocalisation précise de l'internaute. Si la géolocalisation de l'internaute correspond à une annonce publicitaire locale 240 alors, cette annonce publicitaire locale 240 sera affichée.

Eventuellement, suite à l'affichage de ladite annonce publicitaire locale 240, si l'internaute le souhaite, il peut, en cliquant sur un bouton (« autre géolocalisation ») le renvoyant vers une plateforme 281 où il peut modifier le cookie existant, modifier sa géolocalisation de façon plus précise en la spécifiant sur ladite plateforme 281, par exemple en spécifiant un code postal ou une adresse précise. Dans ce cas, le précédent cookie est effacé du support de navigation et remplacé par le nouveau qui est enregistré dans ledit support de navigation par l'intermédiaire de ladite plateforme 281. Suite à cette opération de changement du cookie, le système de communication selon l'invention repart de l'étape d'appel de la fenêtre publicitaire 210.

Comme illustré à la Figure 10, l'adresse IP 1010 de l'internaute est utilisée pour déterminer la géolocalisation 1020 de son adresse IP, et la base de données 1040 enregistre alors la géolocalisation 1020 de son adresse IP ainsi que la géolocalisation 1050 spécifiée par l'internaute.

Dans le cas contraire, si aucune annonce locale ne correspond à la géolocalisation de l'internaute alors, le système de communication va s'adresser à un programme secondaire 250 qui va permettre l'affichage d'une annonce publicitaire nationale 260.

En-dehors des étapes relatives à la Figure 10 et qui concernent la collecte d'informations pour la base de données 1040, la troisième voie selon le schéma opérationnel 1600 est similaire à la troisième voie selon le schéma opérationnel 200 illustré à la Figure 2.

Selon une réalisation de l'invention, les annonces locales sont diffusées en priorité aux internautes géolocalisés de la façon la plus précise, c'est-à-dire d'abord à ceux qui ont spécifié leur géolocalisation et ensuite aux internautes géolocalisés par leur navigateur. S'il reste des annonces locales après que les internautes géolocalisés par navigateur ou système de géolocalisation de navigateur, ou qui ont spécifié leur géolocalisation, ont reçu une annonce publicitaire locale, elles seront alors diffusées aux internautes géolocalisés par leur adresse IP sur un territoire correspondant à ces annonces locales. S'il ne reste pas d'annonces locales après la diffusion aux internautes les mieux géolocalisés, c'est-à-dire géolocalisés par leur navigateur ou par la spécification de leur géolocalisation, les internautes géolocalisés par leur adresse IP auront une annonce publicitaire non locale.

## Revendications

1. Méthode de géolocalisation d'un internaute dont l'adresse IP est connue, ce qui permet de déterminer un point (810, 820, 830) de géolocalisation de son adresse IP, méthode dans laquelle l'internaute se voit attribuer une géolocalisation (1410, 1420, 1430) sur un territoire (1110, 1120, 1130) correspondant au point (810, 820, 830) de géolocalisation de son adresse IP et **caractérisée en ce que** le territoire (1110, 1120, 1130) correspondant au point (810, 820, 830) de géolocalisation de l'adresse IP dudit internaute est déterminé par un recoupement de données de géolocalisation par adresse IP (1020) et de données de géolocalisation par au moins une autre méthode de géolocalisation (1030, 1050), lesquelles données concernent une pluralité d'autres internautes géolocalisés à la fois par leur adresse IP et par au moins une autre méthode de géolocalisation.

2. Méthode de géolocalisation selon la revendication 1, **caractérisée en ce que** l'attribution audit internaute d'une géolocalisation (1410, 1420, 1430) sur le territoire (1110, 1120, 1130) correspondant au point (810, 820, 830) de géolocalisation de son adresse IP se fait de façon à obtenir une distribution substantiellement homogène des géolocalisations des internautes sur les territoires (1110, 1120, 1130) correspondant aux points de géolocalisation de leur adresse IP.

3. Méthode de géolocalisation selon l'une quelconque des revendications précédentes, **caractérisée en ce que** l'attribution audit internaute d'une géolocalisation (1410, 1420, 1430) sur le territoire (1110, 1120, 1130) correspondant au point (810, 820, 830) de géolocalisation de son adresse IP se fait de façon à éviter une densité de géolocalisations d'internautes trop élevée dans les régions où des territoires (1110, 1120, 1130) correspondant à plusieurs points (810, 820, 830) de géolocalisation d'adresses IP se superposent.

4. Méthode de géolocalisation selon l'une quelconque des revendications précédentes, **caractérisée en ce que** l'attribution audit internaute d'une géolocalisation (1410, 1420, 1430) sur le territoire (1110, 1120, 1130) correspondant au point (810, 820, 830) de géolocalisation de son adresse IP exclut une partie (1510) du territoire (1110, 1120, 1130).

5. Méthode de géolocalisation selon l'une quelconque des revendications précédentes, **caractérisée en ce que** l'attribution audit internaute d'une géolocalisation (1410, 1420, 1430) sur le territoire (1110, 1120, 1130) correspondant au point (810, 820, 830) de géolocalisation de son adresse IP prend en compte des données dudit internaute.

6. Méthode de géolocalisation selon la revendication 5, **caractérisée en ce que** l'attribution audit internaute d'une géolocalisation (1410, 1420, 1430) sur le territoire (1110, 1120, 1130) correspondant au point (810, 820, 830) de géolocalisation de son adresse IP prend en compte la langue dans laquelle ledit internaute utilise intemet.

7. Méthode de géolocalisation selon l'une quelconque des revendications précédentes, caractérisée en ce l'au moins une autre méthode de géolocalisation est réalisée via un navigateur internet et un service de géolocalisation de ce navigateur internet (280).

8. Méthode de géolocalisation selon l'une quelconque des revendications précédentes, caractérisée en ce l'au moins une autre méthode de géolocalisation est réalisée via un navigateur internet et un service de géolocalisation de ce navigateur internet (280) grâce à la technologie HTML5 ou une version ultérieure d'un système de langage HTML.

9. Méthode de géolocalisation selon l'une quelconque des revendications précédentes, caractérisée en ce l'au moins une autre méthode de géolocalisation se base sur une géolocalisation effectuée par un internaute de la pluralité d'autres internautes qui spécifie lui-même sa géolocalisation (281).

10. Méthode de géolocalisation selon l'une quelconque des revendications précédentes, **caractérisée en ce qu'**un territoire (1110, 1120, 1130) correspondant à un point (810, 820, 830) de géolocalisation d'adresses IP inclut substantiellement l'ensemble des internautes (910, 920, 930) de la pluralité des autres internautes dont l'adresse IP est géolocalisée en ce point (810, 820, 830) et qui sont géolocalisés par au moins une autre méthode de géolocalisation.

11. Méthode de géolocalisation selon l'une quelconque des revendications précédentes, **caractérisée en ce que** la détermination du territoire (1110, 1120, 1130) correspondant à un point (810, 820, 830) de géolocalisation d'adresses IP comprend un traitement des données de géolocalisation.

12. Méthode de géolocalisation selon l'une quelconque des revendications précédentes, **caractérisée en ce que** le territoire (1110, 1120, 1130) correspondant à un point (810, 820, 830) de géolocalisation d'adresses IP a la forme d'un cercle qui passe par les deux internautes de la pluralité d'autres internautes les plus éloignés l'un de l'autre dont les adresses IP sont localisées audit point (810, 820, 830) de géolocalisation d'adresses IP et qui sont aussi géolocalisés grâce à au moins une autre méthode de géolocalisation.

13. Méthode de géolocalisation selon l'une quelconque des revendications précédentes, **caractérisée en ce que** si l'adresse IP dudit internaute est géolocalisée en un point (810, 820, 830) correspondant à un territoire (1110,1120,1130) jugé trop grand sur base d'un critère prédéfini, ledit internaute se voit attribuer une géolocalisation à un niveau national.

14. Méthode de géolocalisation selon l'une quelconque des revendications précédentes, **caractérisée en ce que** si l'adresse IP dudit internaute est géolocalisée en un point (810, 820, 830) correspondant à un territoire (1110, 1120, 1130) jugé trop grand sur base d'un critère prédéfini, ledit se voit attribuer une géolocalisation à un niveau non local.

15. Méthode de géolocalisation selon l'une quelconque des revendications précédentes, **caractérisée en ce qu'**elle est adaptée pour au moins un internaute utilisant au moins un des ordinateurs fixes et portables, des tablettes numériques, des téléphones portables (smartphones), des systèmes munis d'un système wifi, des téléviseurs digitaux, des radios et des systèmes de réalité augmentée.

16. Méthode de géolocalisation pour la diffusion d'annonces publicitaires selon l'une quelconque des revendications précédentes.

17. Méthode de géolocalisation selon la revendication 16, **caractérisée en ce qu'**elle est adaptée pour la diffusion d'annonces publicitaires locales.

18. Méthode de géolocalisation pour la diffusion d'annonces publicitaires selon la revendication 17, **caractérisée en ce que** des annonces publicitaires locales sont diffusées en priorité aux internautes géolocalisés de la façon la plus précise.

19. Produit programme d'ordinateur **caractérisé en ce qu'**il est adapté pour mettre en oeuvre la méthode selon l'une quelconque des revendications précédentes.

20. Système de communication **caractérisé en ce qu'**il met en oeuvre la méthode de géolocalisation selon l'une quelconque des revendications 1 à 18.

21. Système de communication selon la revendication 20, **caractérisé en ce qu'**il est adapté pour l'affichage d'annonces publicitaires.

## Patentansprüche

1. Verfahren zur Geolokalisierung eines Internetnutzers, dessen IP-Adresse bekannt ist, was ermöglicht, einen Punkt (810, 820, 830) der Geolokalisierung seiner IP-Adresse zu bestimmen, wobei bei dem Verfahren dem Internetnutzer eine Geolokalisierung (1410, 1420, 1430) auf einem Gebiet (1110, 1120, 1130), das dem Punkt (810, 820, 830) der Geolokalisierung seiner IP-Adresse entspricht, zugewiesen wird, und **dadurch gekennzeichnet, dass** das Gebiet (1110, 1120, 1130), das dem Punkt (810, 820, 830) der Geolokalisierung der IP-Adresse des Internetnutzers entspricht, durch einen Vergleich der Daten der Geolokalisierung durch die IP-Adresse (1020) und der Daten der Geolokalisierung durch zumindest ein weiteres Verfahren zur Geolokalisierung (1030, 1050) bestimmt wird, wobei die Daten eine Vielzahl anderer Internetnutzer betreffen, die gleichzeitig durch ihre IP-Adresse und durch zumindest ein weiteres Verfahren zur Geolokalisierung geolokalisiert sind.

2. Verfahren zur Geolokalisierung nach Anspruch 1, **dadurch gekennzeichnet, dass** die Zuweisung einer Geolokalisierung (1410, 1420, 1430) an den Internetnutzer auf dem Gebiet (1110, 1120, 1130), das dem Punkt (810, 820, 830) der Geolokalisierung seiner IP-Adresse entspricht, so erfolgt, dass eine im Wesentlichen homogene Verteilung von Geolokalisierungen von Internetnutzern auf den Gebieten (1110, 1120, 1130), die den Punkten der Geolokalisierung ihrer IP-Adresse entsprechen, zu erhalten wird.

3. Verfahren zur Geolokalisierung nach einem der vorhergehenden Ansprüche, **dadurch gekennzeichnet, dass** die Zuweisung einer Geolokalisierung (1410, 1420, 1430) an den Internetnutzer auf dem Gebiet (1110, 1120, 1130), das dem Punkt (810, 820, 830) der Geolokalisierung seiner IP-Adresse entspricht, so erfolgt, dass eine zu hohe Dichte an Geolokalisierungen von Internetnutzern in den Regionen vermieden wird, in welchen sich Gebiete (1110, 1120, 1130), die mehreren Punkten (810, 820, 830) der Geolokalisierung von IP-Adressen entsprechen, überdecken.

4. Verfahren zur Geolokalisierung nach einem der vorhergehenden Ansprüche, **dadurch gekennzeichnet, dass** die Zuweisung einer Geolokalisierung (1410, 1420, 1430) an den Internetnutzer auf dem Gebiet (1110, 1120, 1130), das dem Punkt (810, 820, 830) der Geolokalisierung seiner IP-Adresse entspricht, einen Teil (1510) des Gebiets (1110, 1120, 1130) ausschließt.

5. Verfahren zur Geolokalisierung nach einem der vorhergehenden Ansprüche, **dadurch gekennzeichnet, dass** die Zuweisung einer Geolokalisierung (1410, 1420, 1430) an den Internetnutzer auf dem Gebiet (1110, 1120, 1130), das dem Punkt (810, 820, 830) der Geolokalisierung seiner IP-Adresse entspricht, Daten des Internetnutzers berücksichtigt.

6. Verfahren zur Geolokalisierung nach Anspruch 5, **dadurch gekennzeichnet, dass** die Zuweisung einer Geolokalisierung (1410, 1420, 1430) an den Internetnutzer auf dem Gebiet (1110, 1120, 1130), das dem Punkt (810, 820, 830) der Geolokalisierung seiner IP-Adresse entspricht, die Sprache, in der der Internetnutzer das Internet verwendet, berücksichtigt.

7. Verfahren zur Geolokalisierung nach einem der vorhergehenden Ansprüche, **dadurch gekennzeichnet, dass** das zumindest eine andere Verfahren zur Geolokalisierung über einen Internet-Browser und einen Geolokalisierungsdienst dieses Internet-Browsers (280) durchgeführt wird.

8. Verfahren zur Geolokalisierung nach einem der vorhergehenden Ansprüche, **dadurch gekennzeichnet, dass** das zumindest eine andere Verfahren zur Geolokalisierung über einen Internet-Browser und einen Geolokalisierungsdienst dieses Internet-Browsers (280) dank der HTML5-Technologie oder einer nachfolgenden Version eines HTML-Systems durchgeführt wird.

9. Verfahren zur Geolokalisierung nach einem der vorhergehenden Ansprüche, **dadurch gekennzeichnet, dass** das zumindest eine weitere Verfahren zur Geolokalisierung auf einer Geolokalisierung basiert, die durch einen Internetnutzer der Vielzahl anderer Internetnutzer ausgeführt wird, der seine Geolokalisierung (281) selbst spezifiziert.

10. Verfahren zur Geolokalisierung nach einem der vorhergehenden Ansprüche, **dadurch gekennzeichnet, dass** ein Gebiet (1110, 1120, 1130), das einem Punkt (810, 820, 830) der Geolokalisierung von IP-Adressen entspricht, im Wesentlichen die Gesamtheit der Internetnutzer (910, 920, 930) der Vielzahl anderer Internetnutzer einschließt, deren IP-Adresse an diesem Punkt (810, 820, 830) geolokalisiert ist und die durch zumindest ein anderes Verfahren zur Geolokalisierung geolokalisiert sind.

11. Verfahren zur Geolokalisierung nach einem der vorhergehenden Ansprüche, **dadurch gekennzeichnet, dass** die Bestimmung des Gebiets (1110, 1120, 1130), das einem Punkt (810, 820, 830) der Geolokalisierung von IP-Adressen entspricht, eine Verarbeitung der Geolokalisierungsdaten umfasst.

12. Verfahren zur Geolokalisierung nach einem der vorhergehenden Ansprüche, **dadurch gekennzeichnet, dass** das Gebiet (1110, 1120, 1130), das einem Punkt (810, 820, 830) der Geolokalisierung von IP-Adressen entspricht, die Form eines Kreises hat, der durch die zwei Internetnutzer der Vielzahl anderer Internetnutzern verläuft, die voneinander am weitesten entfernt sind, deren IP-Adressen an dem Punkt (810, 820, 830) der Geolokalisierung von IP-Adressen lokalisiert sind und die auch dank zumindest eines anderen Verfahrens zur Geolokalisierung geolokalisiert sind.

13. Verfahren zur Geolokalisierung nach einem der vorhergehenden Ansprüche, **dadurch gekennzeichnet, dass**, wenn die IP-Adresse des Internetnutzers an einem Punkt (810, 820, 830) geolokalisiert ist, der einem Gebiet (1110, 1120, 1130) entspricht, das auf Basis eines vorgegebenen Kriteriums als zu groß beurteilt wird, dem Internetnutzer eine Geolokalisierung auf einem nationalen Niveau zugewiesen wird.

14. Verfahren zur Geolokalisierung nach einem der vorhergehenden Ansprüche, **dadurch gekennzeichnet, dass**, wenn die IP-Adresse des Internetnutzers an einem Punkt (810, 820, 830) geolokalisiert ist, der einem Gebiet (1110, 1120, 1130) entspricht, das auf Basis eines vorgegebenen Kriteriums als zu groß beurteilt wird, dem Internetnutzer eine Geolokalisierung auf einem nicht lokalen Niveau zugewiesen wird.

15. Verfahren zur Geolokalisierung nach einem der vorhergehenden Ansprüche, **dadurch gekennzeichnet, dass** es für zumindest einen Internetnutzer angepasst ist, der zumindest einen/s von Desktop-Computern und tragbaren Computern, Tablets, Mobiltelefonen (Smartphones), mit WiFi ausgestatteten Systemen, Digitalfernsehern, Radios und Systemen für erweiterte Realität verwendet.

16. Verfahren zur Geolokalisierung für die Verbreitung von Werbeanzeigen nach einem der vorhergehenden Ansprüche.

17. Verfahren zur Geolokalisierung nach Anspruch 16, **dadurch gekennzeichnet, dass** es für die Verbreitung lokaler Werbeanzeigen angepasst ist.

18. Verfahren zur Geolokalisierung für die Verbreitung von Werbeanzeigen nach Anspruch 17, **dadurch gekennzeichnet, dass** lokale Werbeanzeigen vorrangig an Internetnutzer verbreitet werden, die am genauesten geolokalisiert sind.

19. Computerprogrammprodukt, **dadurch gekennzeichnet, dass** es angepasst ist, um das Verfahren nach einem der vorhergehenden Ansprüche umzusetzen.

20. Kommunikationssystem, **dadurch gekennzeichnet, dass** es das Verfahren zur Geolokalisierung nach einem der Ansprüche 1 bis 18 umsetzt.

21. Kommunikationssystem nach Anspruch 20, **dadurch gekennzeichnet, dass** es für die Anzeige von Werbeanzeigen angepasst ist.

## Claims

1. A method of geolocation of an internet user whose IP address is known, that allows the determination of a geolocation point (810, 820, 830) of his IP address, method wherein the internet user is assigned a geolocation (1410, 1420, 1430) in a territory (1110, 1120, 1130) corresponding to the geolocation point (810, 820, 830) of his IP address and **characterized in that** the territory (1110, 1120, 1130) corresponding to the geolocation point (810, 820, 830) of the said internet user's IP address is determined by a cross-checking of geolocation data by IP address (1020) and geolocation data from at least one other method of geolocation (1030, 1050), the said data concerning several other internet users geolocated both by their IP address and by at least one other method of geolocation.

2. A method of geolocation according to claim 1, **characterised in that** the assignment to the said internet user of a geolocation (1410, 1420, 1430) within the territory (1110, 1120, 1130) corresponding to the geolocation point (810, 820, 830) of his IP address is made so as to obtain a substantially homogeneous distribution of geolocations of internet users over the territories (1110, 1120, 1130) corresponding to the geolocation points of their IP addresses.

3. A method of geolocation according to either of the preceding claims, **characterised in that** the assignment to the said internet user of a geolocation (1410, 1420, 1430) within the territory (1110, 1120, 1130) corresponding to the geolocation point (810, 820, 830) of his IP address is made so as to avoid an excessive density of geolocations of internet users in the regions where the territories (1110, 1120, 1130) corresponding to several geolocation points (810, 820, 830) of IP addresses overlap.

4. A method of geolocation according to any of the preceding claims, **characterised in that** the assignment to the said internet user of a geolocation (1410, 1420, 1430) within the territory (1110, 1120, 1130) corresponding to the geolocation point (810, 820, 830) of his IP address is made so as to exclude a part (1510) of the territory (1110, 1120, 1130).

5. A method of geolocation according to either of the preceding claims, **characterised in that** the assignment to the said internet user of a geolocation (1410, 1420, 1430) within the territory (1110, 1120, 1130) corresponding to the geolocation point (810, 820, 830) of his IP address takes account of the said internet user's data.

6. A method of geolocation according to claim 5, **characterised in that** the assignment to the said internet user of a geolocation (1410, 1420, 1430) within the territory (1110, 1120, 1130) corresponding to the geolocation point (810, 820, 830) of his IP address takes account of the language in which the said internet user uses the internet.

7. A method of geolocation according to either of the preceding claims, **characterised in that** at least one other method of geolocation is performed via an internet browser and a geolocation service of this internet browser (280).

8. A method of geolocation according to either of the preceding claims, **characterised in that** at least one other method of geolocation is performed via an internet browser and a geolocation service of this internet browser (280) via the HTML5 technology or a later version of the HTML language system..

9. A method of geolocation according to either of the preceding claims, **characterised in that** at least one other method of geolocation is based on a geolocation carried out by an internet users from the plurality of other internet users who specify their geolocations (281) themselves.

10. A method of geolocation according to either of the preceding claims, **characterised in that** a territory (1110, 1120, 1130) corresponding to a geolocation point (810, 820, 830) of IP addresses includes substantially all the internet users (910, 920, 930) from the plurality of other internet users whose IP address is geolocated at this point (810, 820, 830) and who are geolocated by at least one other method of geolocation.

11. A method of geolocation according to either of the preceding claims, **characterised in that** the determination of the territory (1110, 1120, 1130) corresponding to a geolocation point (810, 820, 830) of IP addresses comprises processing of geolocation data.

12. A method of geolocation according to either of the preceding claims, **characterised in that** the territory (1110,1120,1130) corresponding to a geolocation point (810, 8220, 830) of IP addresses has the form of a circle that passes through the two internet users from the plurality of other internet users most distant from one another whose IP address is geolocated at the said point (810, 820, 830) and who are geolocated via at least one other method of geolocation.

13. A method of geolocation according to either of the preceding claims, **characterised in that**, if the IP address of the said internet user is geolocated at a point (810, 820, 830) corresponding to a territory (1110, 1120, 1130) deemed too large based on a predefined criterion, the said internet user is assigned a geolocation at a national level.

14. A method of geolocation according to either of the preceding claims, **characterised in that**, if the IP address of the said internet user is geolocated at a point (810, 820, 830) corresponding to a territory (1110, 1120, 1130) deemed too large based on a predefined criterion, the said internet user is assigned a geolocation at a non-local level.

15. A method of geolocation according to either of the preceding claims, **characterised in that** it is suitable for at least one of fixed and portable computers, data tablets, mobile phones (smartphones), systems equipped with a Wi-Fi system, digital televisions, radios and augmented reality systems.

16. A method of geolocation for broadcasting advertising announcements according to either of the preceding claims.

17. A method of geolocation according to claim 16, **characterised in that** it is suitable for broadcasting local advertising announcements.

18. A method of geolocation for broadcasting advertising announcements according to claim 17, **characterised in that** the local advertising announcements are broadcast in priority to the internet users geolocated in the most precise way.

19. A computer program product **characterised in that** it is suitable for implementing the method according to either of the preceding claims.

20. A communication system **characterised in that** it implements the method of geolocation according to any of claims 1 to 19.

21. A communication system according to claim 20, **characterised in that** it is appropriate for displaying advertising announcements.
